# EUROPEAN PATENT APPLICATION

(11) **EP 4 142 413 A1**
(43) Date of publication of application: **01.03.2023**
(21) Application number: 20934058.7
(22) Date of filing: 30.04.2020
(51) Int. Cl.: H04W 74/08

(54) **SIDELINK FEEDBACK METHOD AND TERMINAL DEVICE**

(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN)
(74) Representative: Taor, Simon Edward William
(86) International application number: PCT/CN2020/088530
(87) International publication number: WO 2021/217674

(57) **Abstract**

The present application relates to a sidelink feedback method and a terminal device, the method comprising: a first terminal device receives first sidelink data sent by a second terminal device; and the first terminal device sends to the second terminal device or a third terminal device first sidelink feedback information corresponding to the first sidelink data; the third terminal device comprises a group head terminal corresponding to the second terminal device. Using the embodiments of the present application can improve the effectiveness of data transmission.

## Description

### TECHNICAL FIELD

The present disclosure relates to the field of communication, and more particularly, to a sidelink feedback method and a terminal device.

### BACKGROUND

Device to device (D2D) technology and vehicle to everything (V2X) technology are important components of mobile communication. In D2D or V2X scenarios, sidelink (SL) transmission technology supports direct communication between devices. Generally, "sidelink" refers to the communication link between terminals, and the link between terminals can be applied to communication nodes in any scene, such as in-car scene, home scene, etc. These communication nodes do not need network coverage. Therefore, sidelink transmission has higher spectral efficiency and lower transmission delay than uplink or downlink, which needs to transmit and receive communication data through base station, in cellular systems. V2X system supports two transmission modes. In the first transmission mode, the transmission resources for the terminal are allocated by the base station, and the terminal transmits sidelink data on the sidelink according to the resources allocated by the base station. In the second transmission mode, the terminal selects resources from the resource pool for sidelink transmission. With the continuous evolution of the next generation mobile communication 5G new radio (NR) system, especially the rise of automatic driving technology, higher requirements are put forward for sidelink data interaction among multiple terminals in V2X system, such as higher throughput, lower delay, higher reliability, larger coverage and more flexible resource allocation, and so on.

In order to improve the transmission reliability in NR-V2X system, a sidelink feedback channel is introduced. For example, for unicast transmission, the transmitter terminal transmits sidelink data to the receiver terminal, and the receiver terminal transmits hybrid automatic repeat request (HARQ) feedback information to the transmitter terminal. Then, the transmitter terminal determines whether retransmission is needed according to the feedback information of the receiver terminal, and the HARQ feedback information is carried in the sidelink feedback channel. Therefore, assuming that the transmission resources of the sidelink are allocated by the network (the first transmission mode), the network allocates transmission resources for sidelink data and transmission resources for sidelink feedback information reporting to the transmitter terminal, and the transmitter terminal reports the sidelink feedback information to the network.

Moreover, in sidelink (SL) transmission, a plurality of terminals may form a communication group, and a terminal in the communication group can be used as a central control node, also known as a cluster head (CH) terminal. The central control node or CH terminal can have one of the following functions: establishment and maintenance of the communication group, joining and leaving of group members, allocation, coordination and scheduling of transmission resources, and coordination of resources with other communication groups. That is, the central control node can allocate sidelink transmission resources to other terminals. The transmitter terminal requests transmission resource from the central control node, the central control node allocates transmission resource to the transmitter terminal, and the transmitter terminal uses the resource to transmit sidelink data to the receiver terminal. The central control node needs to know whether the sidelink data is received correctly, to determine whether retransmission resource needs to be allocated for the transmitter terminal. Here, regarding how the receiver terminal should perform sidelink feedback and how the transmitter terminal should report sidelink feedback information to the central control node, related issues still need to be studied.

### SUMMARY

In view of this, in embodiments of the present disclosure, there are provided a sidelink feedback method and a terminal device, which can be used to specify a sidelink feedback mechanism to a central control node.

In an embodiment of the present disclosure, there is provided a sidelink feedback method. The method includes that: a first terminal device receives first sidelink data from a second terminal device; and the first terminal device transmits first sidelink feedback information corresponding to the first sidelink data to the second terminal device or a third terminal device, the third terminal device including a cluster head terminal corresponding to the second terminal device.

In an embodiment of the present disclosure, there is provided a sidelink feedback method. The method includes that: a second terminal device transmits first sidelink data to a first terminal device; and the second terminal device receives first sidelink feedback information corresponding to the first sidelink data from the first terminal device and transmits the first sidelink feedback information to a third terminal device; or the second terminal device does not expect to receive the first sidelink feedback information corresponding to the first sidelink data from the first terminal device, the third terminal device including a cluster head terminal of a communication group corresponding to the second terminal device.

In an embodiment of the present disclosure, there is provided a sidelink feedback method. The method includes that: a third terminal device transmits indication information of a sidelink transmission resource to a second terminal device, the indication information of the sidelink transmission resource being used to determine the sidelink transmission resource, and the sidelink transmission resource being used for the second terminal device to transmit first sidelink data to the first terminal device; and the third terminal device receives first sidelink feedback information corresponding to the first sidelink data from the first terminal device or the second terminal device, the third terminal device including a cluster head terminal of a communication group corresponding to the second terminal device.

In an embodiment of the present disclosure, there is provided a terminal device, which includes a first receiving module and a first transmitting module.

The first receiving module is configured to receive first sidelink data from a second terminal device.

The first transmitting module is configured to transmit first sidelink feedback information corresponding to the first sidelink data to the second terminal device or a third terminal device, the third terminal device including a cluster head terminal corresponding to the second terminal device.

In an embodiment of the present disclosure, there is provided a terminal device, which includes a second transmitting module and a second receiving module.

The second transmitting module is configured to transmit first sidelink data to a first terminal device.

The second receiving module is configured to receive first sidelink feedback information corresponding to the first sidelink data from the first terminal device and transmit the first sidelink feedback information to a third terminal device; or not expect to receive the first sidelink feedback information corresponding to the first sidelink data from the first terminal device, the third terminal device including a cluster head terminal of a communication group corresponding to the second terminal device.

In an embodiment of the present disclosure, there is provided a terminal device, which includes a third transmitting module and a third receiving module.

The third transmitting module is configured to transmit indication information of a sidelink transmission resource to a second terminal device, the indication information of the sidelink transmission resource being used to determine the sidelink transmission resource, and the sidelink transmission resource being used for the second terminal device to transmit first sidelink data to the first terminal device.

The third receiving module is configured to receive first sidelink feedback information corresponding to the first sidelink data from the first terminal device or the second terminal device, the third terminal device including a cluster head terminal of a communication group corresponding to the second terminal device.

In an embodiment of the present disclosure, there is provided a terminal device, which includes a processor and a memory. The memory is configured to store a computer program, and the processor is configured to call and run the computer program stored in the memory to execute the sidelink feedback method as described above.

In an embodiment of the present disclosure, there is provided a network device, which includes a processor and a memory. The memory is configured to store a computer program, and the processor is configured to call and run the computer program stored in the memory to execute the sidelink feedback method as described above.

In an embodiment of the present disclosure, there is provided a chip, which includes a processor. The processor is configured to call and run a computer program, which causes a device equipped with the chip to execute the sidelink feedback method as described above.

In an embodiment of the present disclosure, there is provided computer readable storage medium, which is configured to store a computer program. The computer program causes a computer to execute the sidelink feedback method as described above.

In an embodiment of the present disclosure, there is provided a computer program product, which includes computer program instructions. The computer program instructions cause a computer to execute the sidelink feedback method as described above.

In an embodiment of the present disclosure, there is provided computer program, which causes a computer to execute the sidelink feedback method as described above.

According to the embodiments of the disclosure, the receiver terminal can directly report the sidelink feedback information to the central control node, and can also report the sidelink feedback information through the transmitter terminal. After receiving the sidelink feedback information, the central control node can distribute retransmission resources for the terminal according to requirements, thereby achieving the purposes of improving the data transmission effectiveness and improving the system performance.

### BRIEF DESCRIPTION OF THE DRAWINGS

FIG. 1 is a schematic diagram of the system effect of sidelink communication within the network coverage according to an embodiment of the present disclosure.
FIG. 2 is a schematic diagram of the system effect of sidelink communication partially covered by the network according to an embodiment of the present disclosure.
FIG. 3 is a schematic diagram of the system effect of sidelink communication outside the network coverage according to an embodiment of the present disclosure.
FIG. 4 is a schematic diagram of a plurality of terminals in a communication group according to an embodiment of the present disclosure.
FIG. 5 is a schematic diagram of sidelink transmission between a transmitter terminal and a receiver terminal in NR-V2X.
FIG. 6 is a flow diagram of a sidelink feedback method of a receiver terminal according to an embodiment of the present disclosure.
FIG. 7 is a flow diagram of a sidelink feedback method of a transmitter terminal according to an embodiment of the present disclosure.
FIG. 8 is a flow diagram of a sidelink feedback method of a cluster head terminal according to an embodiment of the present disclosure.
FIG. 9 is a schematic diagram of a receiver terminal transmitting sidelink feedback information to a cluster head terminal according to an embodiment of the present disclosure.
FIG. 10 is a schematic diagram of a principle of determining a sidelink feedback transmission resource according to a transmission resource for sidelink data in an embodiment of the present disclosure.
FIG. 11 is a schematic diagram of a receiver terminal transmitting sidelink feedback information to a transmitter terminal and the transmitter terminal transmitting the sidelink feedback information to a cluster head terminal according to an embodiment of the present disclosure.
FIG. 12 is a schematic diagram of another principle of determining a sidelink feedback transmission resource according to a transmission resource for sidelink data in an embodiment of the present disclosure.
FIG. 13 to FIG. 15 are schematic structural block diagrams of terminal devices according to a plurality of embodiments of the present disclosure.
FIG. 16 is a schematic block diagram of a communication device according to an embodiment of the present disclosure.
FIG. 17 is a schematic block diagram of a chip according to an embodiment of the present disclosure.
FIG. 18 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure.

The technical solution of the embodiments of the disclosure can be applied to various communication systems. For example, global system of mobile communication (GSM) system, code division multiple access (CDMA) system, wideband code division multiple access (WCDMA) system, general packet radio service (GPRS), long term evolution (LTE) system, advanced long term evolution (LTE-A) system, new radio (NR) system, evolution system of NR system, LTE-based access to unlicensed spectrum (LTE-U) system, NR-based access to unlicensed spectrum (NR-U) system, non-terrestrial networks (NTN) system, universal mobile telecommunication system (UMTS), wireless local area network (WLAN), wireless fidelity (WiFi), 5th-generation communication system or other communication systems.

Generally speaking, conventional communication systems support a limited number of connections and are easy to implement. However, with the development of communication technology, mobile communication systems will not only support conventional communication, but also support, for example, device to device (D2D) communication, machine to machine (M2M) communication, machine type communication (MTC), vehicle to vehicle (V2V) communication, vehicle to everything (V2X), etc. Embodiments of the present disclosure can also be applied to these communication systems.

Optionally, the communication system in the embodiments of the present disclosure can be applied to a carrier aggregation (CA) scenario, a dual connectivity (DC) scenario, and a standalone (SA) network distribution scenario.

Embodiments of the present disclosure are described in connection with a network device and a terminal device, the terminal device may refer to a user equipment (UE), an access terminal, a subscriber unit, a subscriber station, a mobile station, a remote station, a remote terminal, a mobile device, a user terminal, a terminal, a wireless communication device, a user agent, or a user device.

The terminal device may be a station (ST) in the WLAN, it may be a cellular phone, a cordless phone, a session initiation protocol (SIP) telephone, wireless local loop (WLL) station, a personal digital assistant (PDA) device, a handheld device with wireless communication function, a computing device, or other processing device connected to wireless modem, an in-vehicle device, a wearable device, a next-generation communication system such as a terminal device in an NR network, or the terminal device in the future evolved public land mobile network (PLMN) network, etc.

In embodiments of the present disclosure, the terminal device can be deployed on land, including indoor or outdoor, hand-held, wearable or in-vehicle. It can also be deployed on the water (such as ships, etc.). It can also be deployed on the air (such as airplanes, balloons and satellites, etc.).

In embodiments of the present disclosure, the terminal device can be a mobile phone, a pad, a computer with wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or smart home, etc.

By way of example and not limitation, in embodiments of the present disclosure, the terminal device may also be a wearable device. The wearable device can also be called wearable intelligent device, which is the general name of wearable devices developed by applying wearable technology to intelligently design daily wear, such as glasses, gloves, watches, clothing and shoes. The wearable device is a portable device that is worn directly on the body or integrated into the user's clothes or accessories. The wearable device is not only a kind of hardware device, but also realizes powerful functions through software support, data interaction and cloud interaction. Generalized wearable smart devices include full functions and large size, which can realize complete or partial functions without relying on smart phones, such as smart watches or smart glasses, and only focus on certain application functions, which need to be used in conjunction with other devices such as smart phones, such as various smart bracelets and smart jewelry for monitoring physical signs.

In embodiments of the present disclosure, the network device may be a device for communicating with a mobile device, the network device can be an access point (AP) in WLAN, a base transceiver station (BTS) in GSM or CDMA, a NodeB (NB) in WCDMA, an evolutional node B (eNB or eNodeB) in LTE, a relay station or an access point, or an in-vehicle device, a wearable device, a network device in NR network (gNB) or a network device in future evolved PLMN network, etc.

By way of example and not limitation, in embodiments of the present disclosure, the network device may have mobility characteristics, for example, the network device may be a mobile device. Optionally, the network device can be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device can also be a base station arranged on land, water and the like.

In embodiments of that present disclosure, the network device can provide services for a cell, the terminal device communicates with the network device through transmission resource (e.g. frequency domain resource, or spectrum resource) used by the cell, the cell may be a cell corresponding to a network device (e.g. a base station), and the cell can belong to a macro base station or a base station corresponding to small cell. The small cell can include metro cell, micro cell, pico cell, femto cell, etc. These small cells have the characteristics of small coverage and low transmission power, and are suitable for providing high-speed data transmission services.

It should be understood that the terms "system" and "network" in the present disclosure are often used interchangeably herein. In the present disclosure, the term "and/or" is used to describe the association of associated objects, for example, to indicate that there can be three relationships between related objects, for example, A and/or B, which may mean that there are three situations: A alone, A and B at the same time, and B alone. The character "/" in the present disclosure generally means that the relationship of the associated objects is "or".

In order to clearly elaborate the idea of the embodiments of the present disclosure, a brief description of the related contents of the sidelink communication is given firstly.

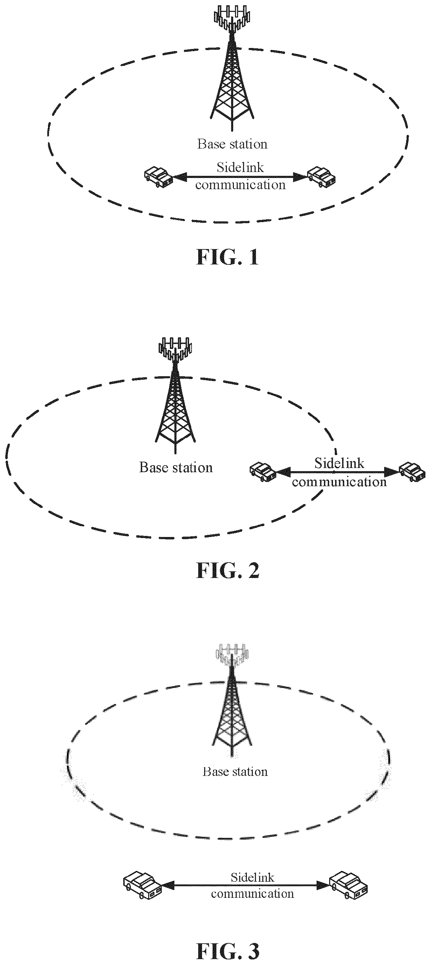

In sidelink communication, according to the network coverage situation of the communication terminal, it can be divided into sidelink communication within the network coverage, sidelink communication partially covered by the network and sidelink communication outside the network coverage, as illustrated in FIG. 1, FIG. 2 and FIG. 3 respectively.

Referring to FIG. 1, in the sidelink communication within the network coverage, all terminals performing sidelink communication are within the coverage of the same base station, so that all of these terminals can receive configuration signaling of the base station and perform sidelink communication based on the same sidelink configuration.

Referring to FIG. 2, in the case of sidelink communication partially covered by the network, part of the terminals performing sidelink communication is located within the coverage of the base station, and another part is located outside the coverage of the base station. The terminal located within the coverage of the base station can receive the configuration signaling of the base station and can perform sidelink communication according to the configuration of the base station. The terminal located outside the coverage of the base station cannot receive the configuration signaling of the base station. In this case, the terminal outside the coverage of the base station determines the sidelink configuration according to the pre-configuration information and the information carried in the physical sidelink broadcast channel (PSBCH) transmitted by the terminal located within the network coverage, and performs sidelink communication.

Referring to FIG. 3, for the sidelink communication outside the network coverage, all terminals performing sidelink communication are located outside the network coverage, and all terminals determine sidelink configuration based on pre-configuration information to perform sidelink communication.

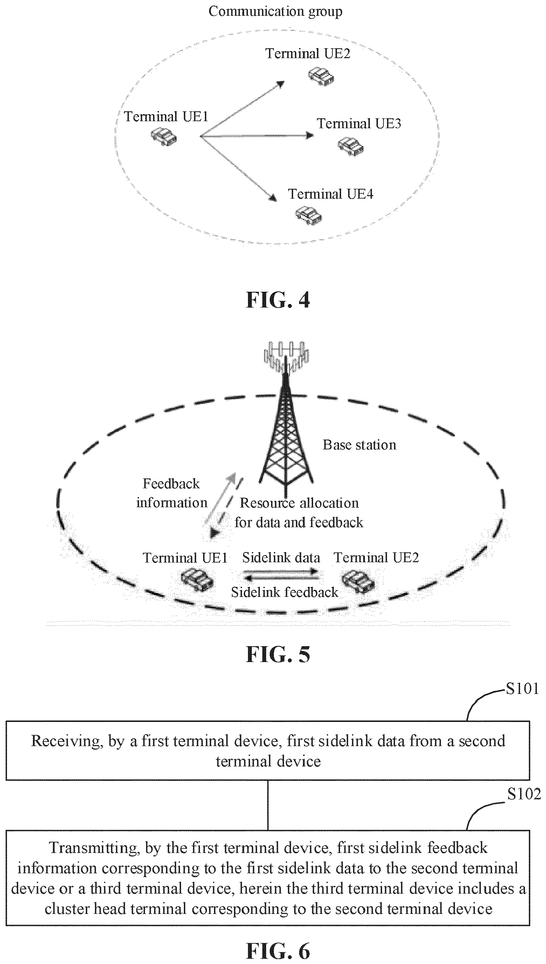

FIG. 1, FIG. 2 and FIG. 3 illustrate that unicast transmission mode is taken as an example, and NR-V2X system also supports multicast transmission mode and broadcast transmission mode. For unicast transmission, there is only one terminal included in the receiver terminal. For multicast transmission, the receiver terminal includes all terminals in a communication group or all terminals within a certain transmission distance. As illustrated in FIG. 4, UE1, LTE2, UE3 and UE4 form a communication group, here UE1 transmits data, and other terminal devices in the group are receiver terminals. For the broadcast transmission mode, the receiver terminal is any terminal around the transmitter terminal.

Referring to FIG. 5, in unicast or multicast of NR-V2X, for the first transmission mode, transmission resource for the sidelink are allocated by a network such as a base station, the network allocates data transmission resource and feedback resource for the sidelink transmission, and the transmitter terminal transmits sidelink feedback information to the network. Specifically, the network allocates resource for sidelink data transmission and transmission resource for sidelink feedback information reporting, such as physical uplink control channel (PUCCH) transmission resource, to the transmitter terminal. The transmitter terminal transmits sidelink data to the receiver terminal on the sidelink transmission resource allocated by the network, which may include a physical sidelink control channel (PSCCH) and a physical sidelink shared channel (PSSCH). The receiver transmits the sidelink feedback information of the sidelink data to the transmiter. The feedback resource of the sidelink may be allocated by the network or determined according to the transmission resource for the sidelink data, for example, the feedback resource are in the next slot of the data transmission resource, occupying the second-to-last and third-to-last time domain symbols of the slot, and the frequency domain resource of the feedback resource are a physical resource block (PRB). The transmitter terminal receives the sidelink feedback information and transmits the sidelink feedback information to the network on the uplink resource allocated by the network.

For the cluster head (CH) terminal or central control node in the communication group, it can allocate sidelink transmission resource for other terminals in the group. Specifically, if the transmitter terminal TX UE transmits a resource request to the CH terminal, the CH terminal allocates sidelink transmission resource for the TX UE, and the TX UE transmits sidelink data to the receiver terminal RX UE on the allocated resource. Here, if the sidelink feedback is activated, the RX UE can transmit the sidelink feedback information according to the detection state of the sidelink data. However, in the process of transmitting the sidelink feedback information by the RX UE, how the RX UE, the TX UE and the CH terminal determine their respective behaviors to ensure efficient and accurate sidelink data transmission is a problem to be solved.

The solutions provided by the embodiments of the present disclosure are described below by way of a plurality of embodiments, for convenience of description, the receiver terminal RX UE is sometimes referred to below as "a first terminal device", the transmitter terminal TX UE is referred to as "a second terminal device", and the CH terminal is referred to as "a third terminal device", the CH terminal can also be referred to as a central control node, and the two are interchangeable in most cases. In the present disclosure, sometimes the transmitter terminal is referred to as the transmiter for short, and the receiver terminal is referred to as the receiver for short, which will not bring ambiguity.

Referring to FIG. 6, an embodiment of the present disclosure provides a sidelink feedback method applied to a receiver terminal, the method includes the following operations.

At block S101, the first terminal device receives first sidelink data from a second terminal device.

At block 5102, the first terminal device transmits first sidelink feedback information corresponding to the first sidelink data to the second terminal device or a third terminal device, the third terminal device including a cluster head terminal corresponding to the second terminal device.

According to the embodiment of the present disclosure, after receiving the sidelink data from the transmitter terminal, the receiver terminal can directly transmit the sidelink feedback information to the central control node, and can also transmit the sidelink feedback information to the transmitter terminal, and the transmitter terminal can report the sidelink feedback information to the central control node. For example, if the receiver terminal and the central control node are in the same communication group, the receiver terminal can directly transmit sidelink feedback information to the central control node. If the receiver terminal and the central control node are in different communication groups, the receiver terminal cannot transmit information directly to the central control node, then the receiver terminal can choose to transmit the sidelink feedback information to the transmitter terminal, and report the sidelink feedback information through the transmitter terminal.

According to the embodiment of the disclosure, the receiver terminal can directly report the sidelink feedback information to the central control node, and can also report the sidelink feedback information through the transmitter terminal. After receiving the sidelink feedback information, the central control node can distribute retransmission resource for the terminal according to requirements, thus achieving the purposes of improving the data transmission effectiveness and improving the system performance.

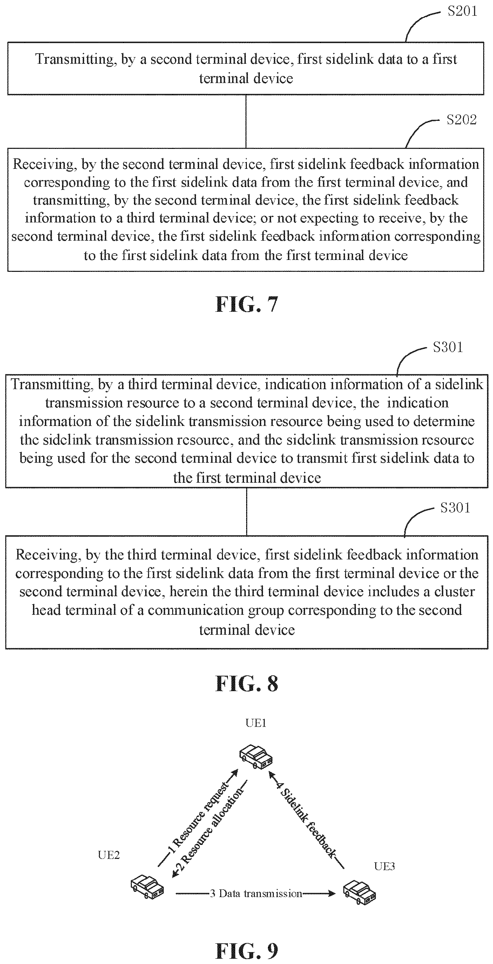

Correspondingly, referring to FIG. 7, an embodiment of the present disclosure provides a sidelink feedback method applied to a transmitter terminal, the method includes the following operations.

At block S201, the second terminal device transmits first sidelink data to a first terminal device.

At block S202, the second terminal device receives first sidelink feedback information corresponding to the first sidelink data from the first terminal device and transmits the first sidelink feedback information to a third terminal device; or the second terminal device does not expect to receive the first sidelink feedback information corresponding to the first sidelink data from the first terminal device, the third terminal device including a cluster head terminal of a communication group corresponding to the second terminal device.

According to an embodiment of the present disclosure, after the transmitter terminal transmits the sidelink data to the receiver terminal, on the one hand, after receiving the sidelink feedback information, the sidelink feedback information is reported to the central control node to ensure the effective transmission of data. On the other hand, since the receiver terminal can directly report the sidelink feedback information to the central control node, the transmitter terminal does not expect to receive the sidelink feedback information at this time, so that the time delay and signaling overhead can be reduced.

Correspondingly, referring to FIG. 8, an embodiment of the present disclosure provides a sidelink feedback method applied to a central control node, the method includes the following operations.

At block S301, the third terminal device transmits indication information of a sidelink transmission resource to a second terminal device, the indication information of the sidelink transmission resource being used to determine the sidelink transmission resource, and the sidelink transmission resource being used for the second terminal device to transmit first sidelink data to the first terminal device.

At block S302, the third terminal device receives first sidelink feedback information corresponding to the first sidelink data from the first terminal device or the second terminal device, the third terminal device including a cluster head terminal corresponding to the second terminal device.

According to the embodiment of the present disclosure, the central control node allocates sidelink transmission resource for the transmitter terminal in the communication group, and receives sidelink feedback information. The sidelink feedback information may come from the transmitter terminal, and may also come from a receiver terminal. The central control node can determine whether to allocate retransmission resource according to requirements. For example, if the sidelink feedback information is positive confirmation ACK information, it does not need to allocate retransmission resource, and if the sidelink feedback information is negative confirmation NACK information, it needs to allocate retransmission resource, thereby improving data transmission effectiveness and system performance.

Various implementations of embodiments of the present disclosure are described in detail below.

In sidelink transmission, the following steps are usually included:
at first step, the transmitter terminal TX UE requests the transmission resource from the CH;
at second step, the CH terminal allocates the sidelink transmission resource for the transmitter terminal TX UE;
at third step, the transmitter terminal TX UE transmits sidelink data to the receiver terminal RX UE on the transmission resource, such as PSCCH and PSSCH;
at fourth step, the receiver terminal RX UE receives the sidelink data transmitted by the transmitter terminal TX UE, and transmits the sidelink feedback information according to the detection state of the sidelink data.

In the embodiment of the present disclosure, the receiver terminal RX UE can directly transmit the sidelink feedback information to the CH, and can also transmit the sidelink feedback information to the transmitter terminal TX UE. For the two sidelink feedback manners, it is necessary to determine which manner to adopt for sidelink feedback in sidelink transmission.

In the embodiment of the present disclosure, optionally, the sidelink feedback manner can be determined by the CH, or the sidelink feedback manner can be determined by the transmitter terminal TX UE, or the sidelink feedback manner can be determined according to the network configuration information or the pre-configuration information, and the sidelink feedback manner can also be determined according to the resource pool configuration information. The following are introduced separately.

First manner: the cluster head terminal determines the sidelink feedback manner.

Optionally, the cluster head terminal transmits first indication information to the transmitter terminal, and the first indication information is used for determining the sidelink feedback manner. Further, the transmitter terminal transmits the first indication information to the receiver terminal, and the first indication information is used for determining the sidelink feedback manner and determining whether to give feedback to the transmitter terminal or to the cluster head terminal. For example, when the cluster head terminal allocates sidelink transmission resource to the transmitter terminal, the cluster head terminal may simultaneously indicate the sidelink feedback manner.

Optionally, the cluster head terminal transmits the first indication information to the receiver terminal, and the first indication information is used for determining the sidelink feedback manner.

Optionally, the first indication information for determining the sidelink feedback manner may be carried in the sidelink control information (SCI), including SCI at a first stage or SCI at a second stage; it can also be carried in PC5-RRC signaling, media access control control element (MAC CE) and/or PSBCH.

Second manner: the transmitter terminal determines the sidelink feedback manner.

When the transmiter transmits the sidelink data to the receiver, the sidelink feedback manner can be indicated at the same time. For example, the transmiter carries indication information in the SCI, and the indication information is used to indicate the manner that the receiver transmits sidelink feedback information, and determine whether to give feedback to the transmitter terminal or to the cluster head terminal. As another example, when a unicast link is established between the transmiter and the receiver, a sidelink feedback manner is indicated to the receiver terminal through PC5-RRC signaling.

Third manner: the sidelink feedback manner is determined according to network configuration information or pre-configuration information.

For example, a network device transmits a system information broadcast (SIB), a radio resource control (RRC) signaling, or a downlink control information (DCI), the SIB, RRC, or DCI carries indication information of a sidelink feedback manner, and the transmitter terminal or the receiver terminal determines the sidelink feedback manner according to the indication information, and determines whether to give feedback to the transmitter terminal or to the cluster head terminal.

Fourth manner: the sidelink feedback manner is determined according to resource pool configuration information.

The resource pool for sidelink transmission can be network configured, pre-configured, or cluster head terminal configured. The resource pool configuration information includes indication information of sidelink feedback manner. A terminal using the resource pool for sidelink data transmission can determine a corresponding sidelink feedback manner according to the indication information of sidelink feedback manner corresponding to the resource pool, and determine to give feedback to the transmitter terminal or the cluster head terminal.

Optionally, in the embodiment of the present disclosure, the first sidelink data may be a PSCCH, a PSSCH, a demodulation reference signal (DMRS), or a channel state information reference signal (CSI-RS).

Optionally, in the embodiment of the present disclosure, the sidelink feedback information may be HARQ-ACK feedback information, channel quality indicator (CQI), rank indicator (RI), precoding matrix indicator (PMI), reference signal index and other information.

In order to more clearly and comprehensively describe the specific implementation manners of the embodiments of the present disclosure and explain the advantages achieved by various implementation manners, the respective processes of the receiver terminal, the transmitter terminal and the cluster head terminal will be described in detail below, and then the process of three-terminal interaction will be described in detail through a plurality of specific embodiments.

### I. Receiver terminal

In an embodiment of the present disclosure, optionally, the first terminal device acquires first indication information, the first indication information being used to indicate a manner in which the first terminal device transmits the first sidelink feedback information, the manner for transmitting the first sidelink feedback information including that: the first terminal device transmits the first sidelink feedback information to the second terminal device, or the first terminal device transmits the first sidelink feedback information to the third terminal device.

In an embodiment of the present disclosure, optionally, the first terminal device acquires the first indication information in at least one of the following manners:
a) the first indication information is transmitted by the second terminal device to the first terminal device;
b) the first indication information is transmitted by the third terminal device to the first terminal device;
c) the first indication information is transmitted by the third terminal device to the second terminal device and is transmitted by the second terminal device to the first terminal device;
d) the first indication information is configured by a network device;
e) the first indication information is configured by pre-configuration information; or
f) the first indication information is configured by resource pool configuration information.

Using at least one of the above manners, the receiver terminal RX UE can determine to transmit the sidelink feedback information directly to the CH terminal or to transmit the sidelink feedback information to the transmitter terminal TX UE. Further, it is necessary to determine the sidelink feedback transmission resource for transmitting the sidelink feedback information. Embodiments of the present disclosure are provided with various implementations, which will be described in the following cases.

First case: the receiver terminal RX UE transmits the sidelink feedback information to the CH terminal, and determines the sidelink feedback transmission resource according to the transmission resource for the sidelink data.

In the embodiment of the present disclosure, optionally, the first terminal device transmits the first sidelink feedback information corresponding to the first sidelink data to the third terminal device, and the first terminal device determines a first sidelink feedback transmission resource, the first sidelink feedback transmission resource being used for the first terminal device to transmit the first sidelink feedback information corresponding to the first sidelink data to the third terminal device through the first sidelink feedback transmission resource.

In the embodiment of the present disclosure, optionally, the operation that the first terminal device determines the first sidelink feedback transmission resource includes that: the first terminal device determines the first sidelink feedback transmission resource according to a transmission resource for the first sidelink data.

In the embodiment of the present disclosure, optionally, the operation that the first terminal device determines the first sidelink feedback transmission resource according to the transmission resource for the first sidelink data includes that: the first terminal device determines the first sidelink feedback transmission resource according to time domain resource indication information corresponding to the transmission resource for the first sidelink data, frequency domain resource indication information corresponding to the transmission resource for the first sidelink data; and/or code domain resource indication information corresponding to the transmission resource for the first sidelink data.

In the embodiment of the present disclosure, optionally, the operation that the first terminal device determines the first sidelink feedback transmission resource according to the transmission resource for the first sidelink data includes that: the first terminal device determines the first sidelink feedback transmission resource according to at least one of: identification (ID) information of the first terminal device, ID information of the second terminal device, or ID information of the third terminal device.

In the embodiment of the present disclosure, optionally, the operation that the first terminal device determines the first sidelink feedback transmission resource according to the transmission resource for the first sidelink data includes that: the first terminal device determines one or more sidelink feedback transmission resources corresponding to the transmission resource for the first sidelink data according to a slot index of the transmission resource for the first sidelink data, a sub-channel index of the transmission resource for the first sidelink data; and/or a starting frequency domain position of a frequency domain resource occupied by the transmission resource for the first sidelink data.

In the embodiment of the present disclosure, optionally, the operation that the first terminal device determines the first sidelink feedback transmission resource according to the transmission resource for the first sidelink data includes that:

the first terminal device determines at least one physical resource block (PRB) corresponding to the transmission resource for the first sidelink data according to a slot index of the transmission resource for the first sidelink data, a sub-channel index of the transmission resource for the first sidelink data; and/or a starting frequency domain position of a frequency domain resource occupied by the transmission resource for the first sidelink data; and determines the transmission resource for transmitting the first sidelink feedback information in the at least one PRB according to at least one of: ID information of the first terminal device, ID information of the second terminal device, or ID information of the third terminal device.

In the embodiment of the present disclosure, optionally, the transmission resource for transmitting the first sidelink feedback information is determined by the first terminal device according to a type of the first sidelink feedback information (such as ACK information or NACK information).

In the embodiment of the present disclosure, optionally, the transmission resource for the first sidelink data includes a first physical sidelink shared channel (PSSCH); the first sidelink feedback transmission resource includes a first physical sidelink feedback channel (PSFCH); and the first sidelink feedback information is carried in the first PSFCH.

Second case: the receiver terminal RX UE transmits the sidelink feedback information to the CH terminal, and determines the sidelink feedback transmission resource according to indication information of a sidelink feedback channel transmission resource.

In the embodiment of the present disclosure, optionally, the operation that the first terminal device determines the first sidelink feedback transmission resource includes that: the first terminal device receives indication information of a sidelink feedback channel transmission resource from the third terminal device, the indication information of the sidelink feedback channel transmission resource being used to determine the first sidelink feedback transmission resource; and the first terminal device determines the first sidelink feedback transmission resource according to the indication information of the sidelink feedback channel transmission resource.

In the embodiment of the present disclosure, optionally, the operation that the first terminal device determines the first sidelink feedback transmission resource includes that: the first terminal device receives indication information of a sidelink feedback channel transmission resource from the second terminal device, the indication information of the sidelink feedback channel transmission resource being used to determine the first sidelink feedback transmission resource, the indication information of the sidelink feedback channel transmission resource being transmitted by the third terminal device to the second terminal device; and the first terminal device determines the first sidelink feedback transmission resource according to the indication information of the sidelink feedback channel transmission resource.

In the embodiment of the present disclosure, optionally, the indication information of the sidelink feedback channel transmission resource is carried in at least one of: sidelink control information (SCI), media access control control element (MAC CE) or PC5-radio resource control (RRC) signaling.

In the embodiment of the present disclosure, optionally, the indication information of the sidelink feedback channel transmission resource is carried in SCI at a second stage.

In the embodiment of the present disclosure, Optionally, the indication information of the sidelink feedback channel transmission resource includes at least one of: slot indication information, a slot interval between a slot in which the sidelink feedback channel transmission resource is located and a slot in which the indication information is located, a slot interval between a slot in which the sidelink feedback channel transmission resource is located and a slot in which the first sidelink data is located, a PRB index, an interlace PRB index, indication information of interlace PRB pattern, a sub-channel index, channel information (e.g. a channel with a 20MHz bandwidth), base sequence information, or cyclic shift information.

Third case: the receiver terminal RX UE transmits sidelink feedback information to the CH terminal, and selects sidelink feedback transmission resource from the resource set.

In the embodiment of the present disclosure, optionally, the operation that the first terminal device determines the first sidelink feedback transmission resource includes that: the first terminal device selects the first sidelink feedback transmission resource from a resource set.

In the embodiment of the present disclosure, optionally, the operation that the first terminal device transmits the first sidelink feedback information corresponding to the first sidelink data to the third terminal device includes that: the first terminal device transmits second sidelink data to the third terminal device through the first sidelink feedback transmission resource, the first sidelink feedback information being carried in the second sidelink data.

In the embodiment of the present disclosure, optionally, the first terminal device, the second terminal device and the third terminal device belong to a same communication group.

In the embodiment of the present disclosure, the receiver terminal RX UE belongs to the same communication group as the CH terminal and the transmitter terminal TX UE, so that the receiver terminal RX UE can directly transmit sidelink feedback information to the CH terminal, and the advantages of reducing time delay and signaling overhead can be obtained.

However, if the receiver terminal RX UE and the transmitter terminal TX UE belong to different communication groups, in other words, when the receiver terminal RX UE does not belong to the communication group of the CH terminal, the sidelink feedback information cannot be directly transmitted to the CH terminal through the receiver terminal RX UE, then the above embodiment is no longer applicable. To this end, the embodiments of the present disclosure also provide the following solutions.

In the embodiment of the present disclosure, optionally, the first sidelink feedback information corresponding to the first sidelink data is transmitted by the first terminal device to the second terminal device, and the second terminal device transmits the first sidelink feedback information to the third terminal device.

According to the embodiment, the receiver terminal RX UE transmits the sidelink feedback information to the transmitter terminal TX UE, and the transmitter terminal TX UE reports the sidelink feedback information to the CH terminal, which can be applied to the case where the receiver terminal RX UE and the transmitter terminal TX LTE belong to different communication groups.

Specifically, according to the first case described above, the receiver terminal RX UE transmits the sidelink feedback information to the CH terminal, and determines the sidelink feedback transmission resource according to the transmission resource for the sidelink data. Here, the sidelink feedback transmission resource can be determined according to the sidelink data transmission resource, and it is noted that only one sidelink feedback transmission resource can be determined according to the sidelink data transmission resource, and the plurality of sidelink feedback transmission resource are located in the same slot even if the sidelink data transmission resource corresponds to a plurality of sidelink feedback transmission resource.

In the embodiment, the sidelink feedback channel from the receiver terminal RX UE to the transmitter terminal TX UE and the sidelink feedback channel from the transmitter terminal TX UE to the CH terminal are in different slots. Therefore, for the manner proposed in the embodiment in which the RX UE first transmits the sidelink feedback information to the TX UE and then the TX UE reports to the CH terminal, the mechanism described above that the determined sidelink feedback transmission resource are located in the same slot is no longer applicable, and a new mechanism needs to be introduced to determine a plurality of sidelink feedback transmission resource. In this regard, the embodiments of the present disclosure provide various implementations, which will be described in detail below.

Fourth case: the first terminal device transmits the first sidelink feedback information corresponding to the first sidelink data to the second terminal device, and the second terminal device transmits the first sidelink feedback information to the third terminal device. In at least two sidelink feedback transmission resource sets, the sidelink feedback transmission resource is determined according to the transmission resource for the sidelink data.

In the embodiment of the present disclosure, optionally, the first terminal device transmits the first sidelink feedback information to the second terminal device through a second sidelink feedback transmission resource; and the second terminal device transmits the first sidelink feedback information to the third terminal device through a third sidelink feedback transmission resource.

Optionally, the second sidelink feedback transmission resource and the third sidelink feedback transmission resource may be determined in the following manner.

First manner: according to the transmission resource for the first sidelink data, a sidelink feedback resource can be respectively determined from the two sidelink feedback transmission resource sets as the second sidelink feedback transmission resource and the third sidelink feedback transmission resource.

Second manner: a first sidelink feedback resource can be determined in a sidelink feedback transmission resource set according to the transmission resource for the first sidelink data, a second sidelink feedback resource is determined in another sidelink feedback transmission resource set according to the first sidelink feedback resource, and the two sidelink feedback resources are respectively used as a second sidelink feedback transmission resource and a third sidelink feedback transmission resource.

Optionally, the second sidelink feedback transmission resource is a transmission resource determined in a first sidelink feedback transmission resource set according to a transmission resource for the first sidelink data, and/or the second sidelink feedback transmission resource is a transmission resource determined in the first sidelink feedback transmission resource set according to a third sidelink feedback transmission resource.

Optionally, the third sidelink feedback transmission resource is a transmission resource determined in a second sidelink feedback transmission resource set according to a transmission resource for the first sidelink data, and/or the third sidelink feedback transmission resource is a transmission resource determined in the second sidelink feedback transmission resource set according to a second sidelink feedback transmission resource.

In the embodiment of the present disclosure, optionally, the second sidelink feedback transmission resource and the third sidelink feedback transmission resource are located in different slots.

In the embodiment of the present disclosure, optionally, the second sidelink feedback transmission resource is a transmission resource determined in the first sidelink feedback transmission resource set according to at least one of: ID information of the first terminal device or ID information of the second terminal device; and/or the third sidelink feedback transmission resource is a transmission resource determined in the second sidelink feedback transmission resource set according to at least one of: the ID information of the first terminal device, the ID information of the second terminal device or ID information of the third terminal device.

In the embodiment of the present disclosure, optionally, the first sidelink feedback transmission resource set and/or the second sidelink feedback transmission resource set is configured by at least of a network device, pre-configuration information or the third terminal device.

In the embodiment of the present disclosure, optionally, the first sidelink feedback transmission resource set and the second sidelink feedback transmission resource set are configured while configuring a sidelink resource pool (such as a PSSCH resource pool).

In the embodiment of the present disclosure, optionally, the second sidelink feedback transmission resource is a transmission resource selected from the first sidelink feedback transmission resource set according to a type of the first sidelink feedback information (e.g. ACK or NACK).

In an embodiment of the present disclosure, optionally, the third sidelink feedback transmission resource is a transmission resource selected from the second sidelink feedback transmission resource set according to a type of the first sidelink feedback information (e.g. ACK or NACK).

Fifth case: the first terminal device transmits the first sidelink feedback information corresponding to the first sidelink data to the second terminal device, and the second terminal device transmits the first sidelink feedback information to the third terminal device. In at least two sidelink feedback transmission resource sets, the third terminal device determines the sidelink feedback transmission resource.

In the embodiment of the present disclosure, optionally, the first sidelink feedback information is transmitted by the first terminal device to the second terminal device through a second sidelink feedback transmission resource; the first sidelink feedback information is transmitted by the second terminal device to the third terminal device through a third sidelink feedback transmission resource, and at least one of the second sidelink feedback transmission resource or the third sidelink feedback transmission resource is determined by the third terminal device.

In the embodiment of the present disclosure, optionally, the second sidelink feedback transmission resource and the third sidelink feedback transmission resource are transmitted by the third terminal device to the second terminal device, and the second sidelink feedback transmission resource is transmitted by the second terminal device to the first terminal device.

In the embodiment of the present disclosure, optionally, the second sidelink feedback transmission resource is transmitted by the third terminal device to the first terminal device, and the third sidelink feedback transmission resource is transmitted by the third terminal device to the second terminal device.

In the embodiment of the present disclosure, optionally, the second sidelink feedback transmission resource is transmitted by the third terminal device to the second terminal device and is transmitted by the second terminal device to the first terminal device; and the third sidelink feedback transmission resource is determined by the second terminal device according to a transmission resource for the first sidelink data.

In the embodiment of the present disclosure, optionally, the third sidelink feedback transmission resource is transmitted by the third terminal device to the second terminal device; and the second sidelink feedback transmission resource is determined by the first terminal device according to a transmission resource for the first sidelink data.

In the embodiment of the present disclosure, optionally, the transmission resource for the first sidelink data includes a second PSSCH, the second sidelink feedback transmission resource includes a second PSFCH, the third sidelink feedback transmission resource includes a third PSFCH, and the first sidelink feedback information is carried in the second PSFCH and the third PSFCH.

In an embodiment of the present disclosure, the ID information includes at least one of: radio network temporary identity (RNTI) information of a terminal device or in-group ID information of the terminal device within a communication group.

### II. Transmitter terminal

Corresponding to the behavior of the receiver terminal and the cluster head terminal, the transmitter terminal of the embodiment of the present disclosure realizes the object of the embodiment of the present disclosure by a sidelink feedback method as illustrated in FIG. 7. Further, the transmitter terminal also performs the following various processes.

In the embodiment of the present disclosure, optionally, the second terminal device transmits first indication information to the first terminal device, or the second terminal device receives the first indication information from the third terminal device and transmits the first indication information to the first terminal device.

In the embodiment of the present disclosure, optionally, the second terminal device acquires first indication information, the first indication information being configured by a network device, pre-configuration information or resource pool configuration information.

The first indication information is used to indicate a manner in which the first terminal device transmits the first sidelink feedback information; and the manner for transmitting the first sidelink feedback information includes that: the first terminal device transmits the first sidelink feedback information to the second terminal device, or the first terminal device transmits the first sidelink feedback information to the third terminal device.

In the embodiment of the present disclosure, optionally, in response to that the second terminal does not expect to receive the first sidelink feedback information corresponding to the first sidelink data from the first terminal device, the second terminal device receives indication information of a sidelink feedback channel transmission resource from the third terminal device, and the second terminal device transmits the indication information of the sidelink feedback channel transmission resource to the first terminal device, the indication information of the sidelink feedback channel transmission resource being used for determining the first sidelink feedback transmission resource, the first sidelink feedback transmission resource being used for the first terminal device to transmit the first sidelink feedback information to the third terminal device through the first sidelink feedback transmission resource.

In the embodiment of the present disclosure, optionally, the indication information of the sidelink feedback channel transmission resource is carried in at least one of: sidelink control information (SCI), media access control control element (MAC CE) or PC5-radio resource control (RRC) signaling.

In the embodiment of the present disclosure, optionally, the indication information of the sidelink feedback channel transmission resource is carried in SCI at a second stage.

In the embodiment of the present disclosure, optionally, the indication information of the sidelink feedback channel transmission resource includes at least one of: slot indication information, a slot interval between a slot in which the sidelink feedback channel transmission resource is located and a slot in which the indication information is located, a slot interval between a slot in which the sidelink feedback channel transmission resource is located and a slot in which the first sidelink data is located, a PRB index, an interlace PRB index, indication information of interlace PRB pattern, a sub-channel index, channel information, base sequence information, or cyclic shift information.

In the embodiment of the present disclosure, optionally, the second terminal device receives the first sidelink feedback information from the first terminal device through a second sidelink feedback transmission resource and transmits the first sidelink feedback information to the third terminal device through a third sidelink feedback transmission resource; the second sidelink feedback transmission resource being a transmission resource determined in a first sidelink feedback transmission resource set according to a transmission resource for the first sidelink data, and/or the second sidelink feedback transmission resource being a transmission resource determined in the first sidelink feedback transmission resource set according to a third sidelink feedback transmission resource; and the third sidelink feedback transmission resource being a transmission resource determined in a second sidelink feedback transmission resource set according to the transmission resource for the first sidelink data, and/or the third sidelink feedback transmission resource being a transmission resource determined in the second sidelink feedback transmission resource set according to a second sidelink feedback transmission resource.

In the embodiment of the present disclosure, optionally, the second sidelink feedback transmission resource is a transmission resource determined in the first sidelink feedback transmission resource set according to at least one of: ID information of the first terminal device or ID information of the second terminal device; and/or the third sidelink feedback transmission resource is a transmission resource determined in the second sidelink feedback transmission resource set according to at least one of: the ID information of the first terminal device, the ID information of the second terminal device or ID information of the third terminal device.

In the embodiment of the present disclosure, optionally, the second sidelink feedback transmission resource is a transmission resource selected from the first sidelink feedback transmission resource set according to a type of the first sidelink feedback information; and/or, the third sidelink feedback transmission resource is a transmission resource selected from the second sidelink feedback transmission resource set according to the type of the first sidelink feedback information.

In the embodiment of the present disclosure, optionally, the first sidelink feedback transmission resource set and/or the second sidelink feedback transmission resource set is configured by a network device; and/or the first sidelink feedback transmission resource set and/or the second sidelink feedback transmission resource set is configured by pre-configuration information; and/or the first sidelink feedback transmission resource set and/or the second sidelink feedback transmission resource set is configured by the third terminal device.

In the embodiment of the present disclosure, optionally, the first sidelink feedback information is received by the second terminal device from the first terminal device through a second sidelink feedback transmission resource and is transmitted to the third terminal device through a third sidelink feedback transmission resource, at least one of the second sidelink feedback transmission resource or the third sidelink feedback transmission resource being determined by the third terminal device.

In the embodiment of the present disclosure, optionally, information of the second sidelink feedback transmission resource and information of the third sidelink feedback transmission resource are transmitted by the third terminal device to the second terminal device, and the information of the second sidelink feedback transmission resource is transmitted by the second terminal device to the first terminal device.

In the embodiment of the present disclosure, optionally, information of the second sidelink feedback transmission resource is transmitted by the third terminal device to the first terminal device, and information of the third sidelink feedback transmission resource is transmitted by the third terminal device to the second terminal device.

In the embodiment of the present disclosure, optionally, information of the second sidelink feedback transmission resource is transmitted by the third terminal device to the second terminal device and is transmitted by the second terminal device to the first terminal device; and the third sidelink feedback transmission resource is determined by the second terminal device according to a transmission resource for the first sidelink data.

In the embodiment of the present disclosure, optionally, the third sidelink feedback transmission resource is transmitted by the third terminal device to the second terminal device; and the second sidelink feedback transmission resource is determined by the first terminal device according to a transmission resource for the first sidelink data.

In the embodiment of the present disclosure, optionally, the operation that the second terminal device determines the third sidelink feedback transmission resource according to the transmission resource for the first sidelink data includes that: the second terminal device determines the third sidelink feedback transmission resource according to time domain resource indication information corresponding to the transmission resource for the first sidelink data, frequency domain resource indication information corresponding to the transmission resource for the first sidelink data; and/or code domain resource indication information corresponding to the transmission resource for the first sidelink data.

In the embodiment of the present disclosure, optionally, the operation that the second terminal device determines the third sidelink feedback transmission resource according to the transmission resource for the first sidelink data includes that: the second terminal device determines the third sidelink feedback transmission resource according to at least one of: identification (ID) information of the first terminal device, ID information of the second terminal device, or ID information of the third terminal device.

In the embodiment of the present disclosure, optionally, the operation that the second terminal device determines the third sidelink feedback transmission resource according to the transmission resource for the first sidelink data includes that: the second terminal device determines one or more sidelink feedback transmission resources corresponding to the transmission resource for the first sidelink data according to a slot index of the transmission resource for the first sidelink data, a sub-channel index of the transmission resource for the first sidelink data; and/or a starting frequency domain position of a frequency domain resource occupied by the transmission resource for the first sidelink data.

In the embodiment of the present disclosure, optionally, the operation that the second terminal device determines the third sidelink feedback transmission resource according to the transmission resource for the first sidelink data includes that: the second terminal device determines at least one physical resource block (PRB) corresponding to the transmission resource for the first sidelink data according to a slot index of the transmission resource for the first sidelink data, a sub-channel index of the transmission resource for the first sidelink data; and/or a starting frequency domain position of a frequency domain resource occupied by the transmission resource for the first sidelink data; and determines the transmission resource for transmitting the first sidelink feedback information in the at least one PRB according to at least one of: ID information of the first terminal device, ID information of the second terminal device, or ID information of the third terminal device.

In the embodiment of the present disclosure, optionally, information of the third sidelink feedback transmission resource is transmitted by the third terminal device to the second terminal device; and the second sidelink feedback transmission resource is determined by the second terminal device according to a transmission resource for the first sidelink data.

In the embodiment of the present disclosure, optionally, the operation that the second terminal device determines the second sidelink feedback transmission resource according to the transmission resource for the first sidelink data includes that: the second terminal device determines the second sidelink feedback transmission resource according to time domain resource indication information corresponding to the transmission resource for the first sidelink data, frequency domain resource indication information corresponding to the transmission resource for the first sidelink data; and/or code domain resource indication information corresponding to the transmission resource for the first sidelink data.

In the embodiment of the present disclosure, optionally, the operation that the second terminal device determines the second sidelink feedback transmission resource according to the transmission resource for the first sidelink data includes that: the second terminal device determines the third sidelink feedback transmission resource according to at least one of: identification (ID) information of the first terminal device, ID information of the second terminal device, or ID information of the third terminal device.

In the embodiment of the present disclosure, optionally, the operation that the second terminal device determines the second sidelink feedback transmission resource according to the transmission resource for the first sidelink data includes that: the second terminal device determines one or more sidelink feedback transmission resources corresponding to the transmission resource for the first sidelink data according to a slot index of the transmission resource for the first sidelink data, a sub-channel index of the transmission resource for the first sidelink data; and/or a starting frequency domain position of a frequency domain resource occupied by the transmission resource for the first sidelink data.

In the embodiment of the present disclosure, optionally, the operation that the second terminal device determines the second sidelink feedback transmission resource according to the transmission resource for the first sidelink data includes that: the second terminal device determines at least one physical resource block (PRB) corresponding to the transmission resource for the first sidelink data according to a slot index of the transmission resource for the first sidelink data, a sub-channel index of the transmission resource for the first sidelink data; and/or a starting frequency domain position of a frequency domain resource occupied by the transmission resource for the first sidelink data; and determines the transmission resource for transmitting the first sidelink feedback information in the at least one PRB according to at least one of: ID information of the first terminal device, ID information of the second terminal device, or ID information of the third terminal device.

In the embodiment of the present disclosure, optionally, the transmission resource for the first sidelink data includes a second PSSCH, the second sidelink feedback transmission resource includes a second PSFCH, the third sidelink feedback transmission resource includes a third PSFCH, and the first sidelink feedback information is carried in the second PSFCH and the third PSFCH.

In an embodiment of the present disclosure,the ID information includes at least one of: radio network temporary identity (RNTI) information of a terminal device or in-group ID information of the terminal device within a communication group.

In an embodiment of the present disclosure, optionally, the first terminal device and the second terminal device belong to a different communication group. In an embodiment of the present disclosure, optionally, the first terminal device and the second terminal device belong to the same communication group. Therefore, for the second terminal device, it can always receive the feedback information transmitted by the first terminal device.

### III. Cluster head terminal

Corresponding to the behaviors of the receiver terminal and the transmitter terminal, the cluster head terminal of the embodiment of the present disclosure realizes the object of the embodiment of the present disclosure by a sidelink feedback method as illustrated in FIG. 8. Further, the cluster head terminal also performs the following various processes.

In the embodiment of the present disclosure, optionally, the third terminal device transmits first indication information to the first terminal device, or the third terminal device transmits the first indication information to the second terminal device, the first indication information being transmitted by the second terminal device to the first terminal device.

In the embodiment of the present disclosure, optionally, the third terminal device acquires first indication information, the first indication information being configured by a network device, pre-configuration information or resource pool configuration information.

The first indication information is used to indicate a manner in which the first terminal device transmits the first sidelink feedback information; and the manner for transmitting the first sidelink feedback information includes that: the first terminal device transmits the first sidelink feedback information to the second terminal device, or the first terminal device transmits the first sidelink feedback information to the third terminal device.

In the embodiment of the present disclosure, optionally, the third terminal device receives first sidelink feedback information corresponding to the first sidelink data transmitted by the first terminal device through first sidelink feedback transmission resource, the first sidelink feedback transmission resource being determined by the first terminal device according to a transmission resource for the first sidelink data.

In the embodiment of the present disclosure, optionally, the third terminal device transmits indication information of a sidelink feedback channel transmission resource to the first terminal device, the indication information of the sidelink feedback channel transmission resource being used for the first terminal device to determine the first sidelink feedback transmission resource.

In the embodiment of the present disclosure, optionally, the third terminal device transmits indication information of a sidelink feedback channel transmission resource to the second terminal device and the second terminal device transmits the indication information of the sidelink feedback channel transmission resource to the first terminal device, the indication information of the sidelink feedback channel transmission resource being used for the first terminal device to determine the first sidelink feedback transmission resource.

In the embodiment of the present disclosure, optionally, the indication information of the sidelink feedback channel transmission resource is carried in at least one of: sidelink control information (SCI), media access control control element (MAC CE) or PC5-radio resource control (RRC) signaling.

In the embodiment of the present disclosure, optionally, the indication information of the sidelink feedback channel transmission resource is carried in SCI at a second stage.

In the embodiment of the present disclosure, optionally, the indication information of the sidelink feedback channel transmission resource includes at least one of: slot indication information, a slot interval between a slot in which the sidelink feedback channel transmission resource is located and a slot in which the indication information is located, a slot interval between a slot in which the sidelink feedback channel transmission resource is located and a slot in which the first sidelink data is located, a PRB index, an interlace PRB index, indication information of interlace PRB pattern, a sub-channel index, channel information, base sequence information, or cyclic shift information.

In the embodiment of the present disclosure, optionally, the operation that the third terminal device receives the first sidelink feedback information corresponding to the first sidelink data from the first terminal device includes that:

the third terminal device receives second sidelink data transmitted by the first terminal device through the first sidelink feedback transmission resource, the first sidelink feedback information being carried in the second sidelink data, and the first sidelink feedback transmission resource being selected by the first terminal device in a resource set.

In the embodiment of the present disclosure, optionally, the third terminal device receives the first sidelink feedback information corresponding to the first sidelink data from the second terminal device through a third sidelink feedback transmission resource, the first sidelink feedback information is transmitted by the first terminal device to the second terminal device through a second sidelink feedback transmission resource;
the second sidelink feedback transmission resource is a transmission resource determined in a first sidelink feedback transmission resource set according to a transmission resource for the first sidelink data, and/or the second sidelink feedback transmission resource is a transmission resource determined in the first sidelink feedback transmission resource set according to a third sidelink feedback transmission resource;
the third sidelink feedback transmission resource is a transmission resource determined in a second sidelink feedback transmission resource set according to a transmission resource for the first sidelink data, and/or the third sidelink feedback transmission resource is a transmission resource determined in the second sidelink feedback transmission resource set according to a second sidelink feedback transmission resource.

In the embodiment of the present disclosure, optionally, the second sidelink feedback transmission resource and the third sidelink feedback transmission resource are located in different slots.

In the embodiment of the present disclosure, optionally, the second sidelink feedback transmission resource is a transmission resource determined in the first sidelink feedback transmission resource set according to at least one of: ID information of the first terminal device or ID information of the second terminal device; and/or the third sidelink feedback transmission resource is a transmission resource determined in the second sidelink feedback transmission resource set according to at least one of: the ID information of the first terminal device, the ID information of the second terminal device or ID information of the third terminal device.

In the embodiment of the present disclosure, optionally, the second sidelink feedback transmission resource is a transmission resource selected from the first sidelink feedback transmission resource set according to a type of the first sidelink feedback information; and/or, the third sidelink feedback transmission resource is a transmission resource selected from the second sidelink feedback transmission resource set according to the type of the first sidelink feedback information.

In the embodiment of the present disclosure, optionally, the first sidelink feedback transmission resource set and/or the second sidelink feedback transmission resource set is configured by a network device; and/or the first sidelink feedback transmission resource set and/or the second sidelink feedback transmission resource set is configured by pre-configuration information; and/or the first sidelink feedback transmission resource set and/or the second sidelink feedback transmission resource set is configured by the third terminal device.

In the embodiment of the present disclosure, optionally, the third terminal device receives the first sidelink feedback information corresponding to the first sidelink data from the second terminal device through a third sidelink feedback transmission resource, the first sidelink feedback information being transmitted by the first terminal device to the second terminal device through a second sidelink feedback transmission resource; at least one of the second sidelink feedback transmission resource or the third sidelink feedback transmission resource being determined by the third terminal device.

In the embodiment of the present disclosure, optionally, the third terminal device transmits indication information of the second sidelink feedback transmission resource and indication information of the third sidelink feedback transmission resource to the second terminal device, the indication information of the second sidelink feedback transmission resource being transmitted by the second terminal device to the first terminal device, the indication information of the second sidelink feedback transmission resource being used to determine the second sidelink feedback transmission resource, and the indication information of the third sidelink feedback transmission resource being used to determine the third sidelink feedback transmission resource.

In the embodiment of the present disclosure, optionally, the third terminal device transmits indication information of the second sidelink feedback transmission resource to the first terminal device, the third terminal device transmits indication information of the third sidelink feedback transmission resource to the second terminal device, the indication information of the second sidelink feedback transmission resource is used to determine the second sidelink feedback transmission resource, and the indication information of the third sidelink feedback transmission resource being used to determine the third sidelink feedback transmission resource.

In the embodiment of the present disclosure, optionally, the third terminal device transmits indication information of the second sidelink feedback transmission resource to the second terminal device, the second terminal device transmits indication information of the second sidelink feedback transmission resource to the first terminal device, the indication information of the second sidelink feedback transmission resource being used to determine the second sidelink feedback transmission resource; and the third sidelink feedback transmission resource being determined by the second terminal device according to a transmission resource for the first sidelink data.

In the embodiment of the present disclosure, optionally, the third terminal device transmits indication information of the third sidelink feedback transmission resource to the second terminal device, the indication information of the third sidelink feedback transmission resource being used to determine the third sidelink feedback transmission resource; and the second sidelink feedback transmission resource being determined by the first terminal device according to a transmission resource for the first sidelink data.

In the embodiment of the present disclosure, optionally, the third terminal device transmits the corresponding sidelink feedback transmission resource indication information to the first terminal device and/or the second terminal device in at least one of the following manners: the third terminal device transmits time domain resource indication information corresponding to the sidelink feedback transmission resource, the time domain resource indication information including: slot indication information and/or slot interval between time domain position of the sidelink feedback transmission resource and time domain position of sidelink data transmission resource; the third terminal device transmits frequency domain resource indication information corresponding to the sidelink feedback transmission resource, the frequency domain resource indication information including: a PRB index used to determine frequency domain position of the sidelink feedback transmission resource, a sub-channel index and/ or an interlace PRB index; the third terminal device transmits code domain resource indication information corresponding to the sidelink feedback transmission resource; and the third terminal device transmits a resource index value, the resource index value being used to determine the sidelink feedback transmission resource corresponding to the resource index value in a sidelink feedback transmission resource set.

In the embodiment of the present disclosure, optionally, the transmission resource for the first sidelink data includes a second PSSCH, the second sidelink feedback transmission resource includes a second PSFCH, the third sidelink feedback transmission resource includes a third PSFCH, and the first sidelink feedback information is carried in the second PSFCH and the third PSFCH.

In an embodiment of the present disclosure,the ID information includes at least one of: radio network temporary identity (RNTI) information of a terminal device or in-group ID information of the terminal device within a communication group.

In an embodiment of the present disclosure, optionally, the first terminal device and the second terminal device belong to a different communication group, then the third terminal device can receive the feedback information transmitted by the second terminal device. Optionally, the first terminal device and the second terminal device belong to the same communication group, and then the third terminal device can receive the feedback information transmitted by the first terminal device.

According to the embodiment of the present disclosure, the cluster head terminal allocates sidelink transmission resource for the transmitter terminal in the communication group and receives sidelink feedback information, which can come from the transmitter terminal or the receiver terminal. The cluster head terminal can determine whether to allocate retransmission resource according to requirements, thereby improving data transmission effectiveness and system performance.

Further, according to the above-mentioned at least one embodiment of the present disclosure, the terminal device can determine the transmission resource for the sidelink feedback information according to the transmission resource for the sidelink data, for example, the sidelink feedback transmission resource can be determined according to the time domain resource or the frequency domain resource in which the sidelink data transmission resource is located; further, in the multiple configured sidelink feedback transmission resource sets, thereby determining sidelink feedback transmission resource located in different slots. Therefore, the above-mentioned at least one embodiment of the disclosure can meet the use requirements of sidelink transmission and sidelink feedback of terminal device in the communication group or between the communication group and other communication groups, and improve the high efficiency and stability of data transmission of the sidelink transmission system under complex conditions.

The respective processing procedures of the receiver terminal, the transmitter terminal and the cluster head terminal have been described above, respectively, and the process of three-terminal interaction of the receiver terminal, the transmitter terminal and the cluster head terminal is described in detail based on a plurality of specific embodiments below.

First embodiment: the receiver terminal transmits sidelink feedback information to the cluster head terminal.

FIG. 9 illustrates a system architecture diagram of a cluster head terminal (denoted as UE1), a transmitter terminal (denoted as UE2), and a receiver terminal (denoted as UE3) according to an embodiment of the present disclosure, and the sidelink transmission process is as follows.

At first step, UE2 requests the transmission resource from UE1.

At second step, UE1 allocates sidelink transmission resource for LTE2.

At third step, UE2 transmits sidelink data to UE3 on the transmission resource (including PSCCH and PSSCH).

At fourth step, UE3 receives the sidelink data transmitted by the UE2 and transmits the sidelink feedback information to the LTE1 according to the detection state of the sidelink data. Optionally, the sidelink feedback information may be carried in a PSFCH, an SCI (e.g., SCI at a second stage), and/or a PSSCH.

The receiver of the embodiment of the present disclosure directly transmits the sidelink feedback information to the cluster head terminal or the central control node, without the steps that the UE3 transmits the sidelink feedback to the UE2 and the UE2 reports to the UE1, thereby reducing the time delay and the signaling overhead.

As for the manner of determining the sidelink feedback transmission resource, corresponding to the content of the embodiments of the present disclosure described above, at least the following three manners can be adopted.

First manner: sidelink feedback transmission resource is determined according to the transmission resource for sidelink data.

In the embodiment of the present disclosure, optionally, the sidelink feedback transmission resource may be determined according to the time domain resource information, the frequency domain resource information and/or the code domain resource information in which the sidelink data transmission resource is located.

Optionally, the sidelink feedback transmission resource may also be determined based on the ID of RX UE, the ID of TX UE and/or the ID of the cluster head terminal. For example, at least one sidelink feedback resource may be determined based on the sidelink data transmission resource, and the terminal selects one of the transmission resources for transmitting the sidelink feedback information based on the ID of RX UE and ID of CH, or based on the ID of RX UE, ID of TX UE and ID information of CH.

Optionally, the ID information of terminal may be an RNTI of the terminal or an in-group ID within the communication group. For example, UE1, UE2, and UE3 constitute a communication group, and the in-group IDs of the three terminals in the communication group are ID#0, ID#1, and ID#2, respectively.

Optionally, the terminal can select transmission resource according to the type of information to be feedback, such as ACK and NACK correspond to different sidelink feedback resources.

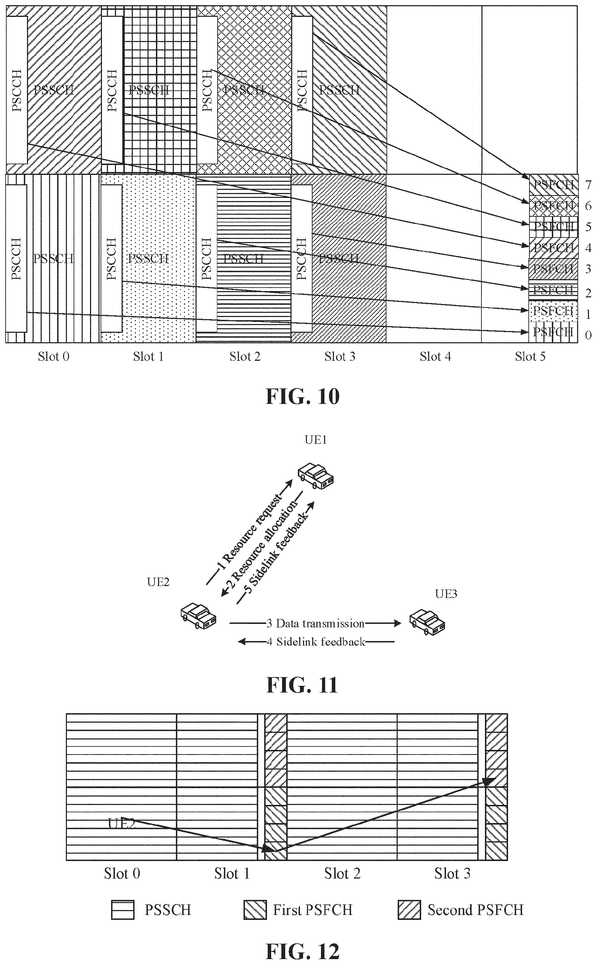

FIG. 10 is a schematic diagram of a principle of determining a sidelink feedback transmission resource according to the transmission resource for sidelink data in an embodiment of the present disclosure. In FIG. 10, the transmission resource for PSSCH is granular in sub-bands, and one sub-band can be used to transmit one PSSCH. One sub-band includes a plurality of consecutive PRBs, and the transmission resource for PSFCH represents one PRB.

As illustrated in FIG. 10, sidelink feedback transmission resource is included in slot 5, the transmission resources for the sidelink feedback channel corresponding to the sidelink transmission resources of the slots 0, 1, 2 and 3 are located in the slot 5. The PSFCH transmission resources and the PSSCH transmission resources have a corresponding relationship, and the transmission resources of the sidelink feedback channel are determined according to the time domain information (such as the slot index) of the sidelink data transmission resource and the frequency domain information (such as the sub-channel index, or the starting frequency domain position of the occupied frequency domain resource) of the sidelink data transmission resource. Specifically, if the transmission resource for sidelink data is located in slot 0 and sub-band 1, the corresponding PSFCH transmission resource corresponds to PRB#4 of slot 5, as illustrated in the box including left slash in slot 0 in the figure.

Optionally, a sidelink transmission resource can correspond to a plurality of sidelink feedback transmission resources. For example, in the PRB of each PSFCH, a plurality of PSFCH channels can be supported to share the PRB in a code division multiplexing manner. The receiver can select a code domain resource (such as a cyclic shift value of a sequence) from a plurality of code domain resources according to ID of RX UE, ID of TX UE or ID of cluster head terminal to transmit sidelink feedback information.

According to the above-mentioned at least one embodiment of the present disclosure, the terminal device can determine the transmission resource for the sidelink feedback information according to the transmission resource for the sidelink data, for example, the sidelink feedback transmission resource can be determined according to the time domain resource or the frequency domain resource in which the sidelink data transmission resource is located; further, in the multiple configured sidelink feedback transmission resource sets, thereby determining sidelink feedback transmission resource located in different slots. Therefore, the above-mentioned at least one embodiment of the disclosure can meet the use requirements of sidelink transmission and sidelink feedback of terminal device in the communication group or between the communication group and other communication groups, and improve the high efficiency and stability of data transmission of the sidelink transmission system under complex conditions.

Second manner: the cluster head terminal determines the sidelink feedback transmission resource.

In an implementation of the present disclosure, a cluster head terminal transmits sidelink feedback resource information to a TX UE, and the TX UE transmits sidelink feedback information to an RX UE.

For example, when LTE1 allocates sidelink data transmission resource for UE2, it also indicates the transmission resource for the sidelink feedback channel, here the indication information of the sidelink feedback channel transmission resource can be carried in the SCI at a second stage. The UE2 transmits sidelink data to the UE3 on the sidelink data transmission resource and simultaneously indicates the transmission resource for the sidelink feedback channel to the UE3, which receives the sidelink data and transmits sidelink feedback to the UE1 on the transmission resource for the sidelink feedback channel.

In another implementation of the present disclosure, a cluster head terminal transmits sidelink feedback resource information to an RX UE. For example, LTE1 allocates sidelink data transmission resource for UE2, and UE1 allocates sidelink feedback channel transmission resource for UE3, here the indication information of the sidelink feedback channel transmission resource can be carried in the SCI at a second stage. The LTE2 transmits sidelink data to the LTE3 on a sidelink data transmission resource, and the UE3 receives the sidelink data and transmits sidelink feedback to the UE1 on a transmission resource for the sidelink feedback channel.

In the present implementation, the information of sidelink feedback resource can be carried in SCI, MAC CE or PC5-RRC signaling.

Specifically, the cluster head terminal transmits indication information of sidelink feedback resource to the TX UE or the RX UE, and the indication information is used to determine the sidelink feedback transmission resource. The indication information may include at least one of the following information:
time domain resource indication information: for example, slot indication information (such as slot index), slot interval (such as the interval between the slot of PSFCH transmission resource and the slot in which the indication information signaling is located, and the interval between the slot in which PSFCH transmission resource is located and the slot in which sidelink data is located);
frequency domain resource indication information: for example, a PRB index, an interlace PRB index, indication information of interlace PRB pattern, a sub-channel index, channel information (e.g. a channel includes 20MHz bandwidth);
code domain resource indication information: for example, base sequence information and cyclic shift information.

Third manner: the receiver terminal determines the sidelink feedback resource.

In an implementation of the present disclosure, UE3 receives sidelink data transmitted by UE2, and UE3 can independently select transmission resource for transmitting sidelink feedback. For example, the sidelink feedback information can be carried in the PSSCH, and the UE3 selects the transmission resource for transmitting the PSSCH independently, and the sidelink feedback information is carried in the PSSCH.

Second Embodiment: a receiver terminal transmits sidelink feedback information to a transmitter terminal, and the transmitter terminal transmits the sidelink feedback information to a cluster head terminal.

FIG. 11 illustrates a system architecture diagram of a cluster head terminal (denoted as UE1), a transmitter terminal (denoted as UE2), and a receiver terminal (denoted as UE3) according to an embodiment of the present disclosure, and the sidelink transmission process is as follows.

At first step, UE2 requests the transmission resource from UE1 (cluster head terminal).

At second step, UE1 allocates sidelink transmission resource for LTE2.

At third step, LTE2 transmits sidelink data to LTE3 by using the transmission resource.

At fourth step, LTE3 transmits sidelink feedback information to LTE2.

At fifth step, UE2 reports the sidelink feedback information to UE1.

The receiver of the embodiment of the disclosure reports the sidelink feedback information through the transmiter, so it is suitable for the situation that the UE2 and the UE3 belong to different communication groups. Of course, in the case where UE1, UE2 and UE3 belong to the same communication group, the present embodiment can also be adopted for processing without affecting the implementation effect.

As for the way of determining the sidelink feedback transmission resource, corresponding to the content of the embodiments of the present disclosure described above, at least the following two manners can be adopted.

First manner: sidelink feedback transmission resource is determined according to the transmission resource for sidelink data.

In the embodiment of the present disclosure, optionally, at least two sidelink feedback transmission resource sets may be defined or configured, for example, which may be referred to as a first sidelink feedback transmission resource set and a second sidelink feedback transmission resource set, here the resource set may also be referred to as the resource pool. According to the sidelink data transmission resource, at least one transmission resource can be determined in the first sidelink feedback transmission resource set, and at least one transmission resource can be determined in the second sidelink feedback transmission resource set. The transmission resource in the first sidelink feedback transmission resource set is used for the RX UE to transmit sidelink feedback information to the TX UE (first PSFCH). The transmission resource in the second sidelink feedback transmission resource set is used for the TX UE to transmit sidelink feedback information to the cluster head terminal (second PSFCH). The first PSFCH and the second PSFCH are located in different slots.

Optionally, the first sidelink feedback resource pool and the second sidelink feedback resource pool may be configured by a network, pre-configured, or configured by a cluster head terminal.

Optionally, the first sidelink feedback resource pool and the second sidelink feedback resource pool are configured at the same time as configuring the sidelink data resource pool (e.g. PSSCH resource pool).

FIG. 12 is a schematic diagram of a principle of determining a sidelink feedback transmission resource according to the transmission resource for sidelink data in an embodiment of the present disclosure. In FIG. 12, a first sidelink feedback resource pool (the part marked by the right slash) and a second sidelink feedback resource pool (the part marked by the left slash) are configured, and the two sidelink feedback resource sets are frequency-divided. The part marked by a horizontal line is a sidelink data resource pool (such as PSSCH resource pool).

Each sidelink data transmission resource (part marked by a horizontal line) may correspond to at least one first PSFCH resource and at least one second PSFCH resource, respectively. Optionally, a sidelink data transmission resource may correspond to at least one first PSFCH resource, which corresponds to at least one second PSFCH resource, as indicated by arrows in the embodiment of FIG. 12.

Then, when the UE2 transmits the PSSCH to the UE3 by using the transmission resource in FIG. 12, the LTE3 may determine the first PSFCH transmission resource (part marked by the right slash) corresponding to the PSSCH transmission resource and transmit the first PSFCH to the UE2 by using the transmission resource. The UE2 receives the first PSFCH and transmits the second PSFCH to the UE1 according to the second PSFCH transmission resource (part marked by the left slash) corresponding to the PSSCH transmission resource (or the first PSFCH).

Optionally, when one sidelink data transmission resource corresponds to at least one first sidelink feedback transmission resource, the receiver determines one sidelink feedback transmission resource according to the ID of RX UE and/or the ID of TX UE.

Optionally, when one sidelink data transmission resource corresponds to at least one second sidelink feedback transmission resource, the transmiter determines one sidelink feedback transmission resource according to the ID of RX UE, the ID of TX LTE and/or the ID of cluster head terminal.

Optionally, the terminal ID may be an RNTI or an in-group ID of the terminal in the communication group.

Optionally, a first sidelink feedback transmission resource is selected from the first sidelink feedback transmission resource set according to ACK or NACK. Optionally, a second sidelink feedback transmission resource is selected from the second sidelink feedback transmission resource set according to ACK or NACK.

Second manner: the sidelink feedback transmission resource is determined according to the cluster head terminal.

In an implementation of the present disclosure, a cluster head terminal determines sidelink feedback transmission resource. For example, when UE2 requests the transmission resource from UE1, UE1 allocates PSSCH transmission resource and sidelink feedback transmission resource to UE2.

In an implementation of the present disclosure, a cluster head terminal allocates a first PSFCH transmission resource and a second PSFCH transmission resource to a transmitter terminal.

In an implementation of the present disclosure, a cluster head terminal allocates a first PSFCH transmission resource to a transmitter terminal, and a second PSFCH transmission resource is determined according to the transmission resource for the PSSCH.

Optionally, the second PSFCH transmission resource is determined according to the transmission resource for the PSSCH, the second PSFCH transmission resource may be determined according to the transmission resource for the PSSCH by using the method provided in the first manner of the aforementioned "the first embodiment" and referring to FIG. 10.

In an implementation of the present disclosure, a cluster head terminal allocates a second PSFCH transmission resource to a transmitter terminal, and a first PSFCH transmission resource is determined according to the transmission resource for the PSSCH.

Similarly, the first PSFCH transmission resource is determined according to the transmission resource for the PSSCH, the first PSFCH transmission resource may be determined according to the transmission resource for the PSSCH by using the method provided in the first manner of the aforementioned "the first embodiment" and referring to FIG. 10.

Optionally, the cluster head terminal allocates PSFCH transmission resource by transmitting indication information of sidelink feedback transmission resource to UE2 and/or UE3. Optionally, the cluster head terminal may indicate time domain resource, frequency domain resource, and/or code domain resource of the PSFCH, for example:
the time domain resource indication information may include: a slot index, a slot interval between the PSFCH time domain resource and the PSSCH time domain resource or PSCCH time domain resource, the PSSCH or PSCCH being associated with the PSFCH;
the frequency domain resource indication information includes an index for determining the PSFCH frequency domain resource, which can be a PRB index, a sub-band index, an interlace PRB index;
the cluster head terminal indicating an index value, according to the index value, a sidelink feedback transmission resource is determined in the PSFCH transmission resource set: for example, all PSFCH in the PSFCH resource set are numbered, the index corresponds to a number, the PSFCH transmission resource can be determined in the PSFCH resource set according to the number.

According to the embodiment of the present disclosure, the cluster head terminal allocates sidelink transmission resource for the transmitter terminal in the communication group and receives sidelink feedback information, which can come from the transmitter terminal or the receiver terminal. The cluster head terminal can determine whether to allocate retransmission resource according to requirements, thereby improving data transmission effectiveness and system performance.

Further, the terminal device of the embodiment of the present disclosure can determine the transmission resource for the sidelink feedback information according to the transmission resource for the sidelink data, for example, the sidelink feedback transmission resource can be determined according to the time domain resource or the frequency domain resource in which the sidelink data transmission resource is located; further, in the multiple configured sidelink feedback transmission resource sets, thereby determining sidelink feedback transmission resource located in different slots, meeting the use requirements of sidelink transmission and sidelink feedback of terminal device in the communication group or between the communication group and other communication groups, and improving the high efficiency and stability of data transmission of the sidelink transmission system under complex conditions.

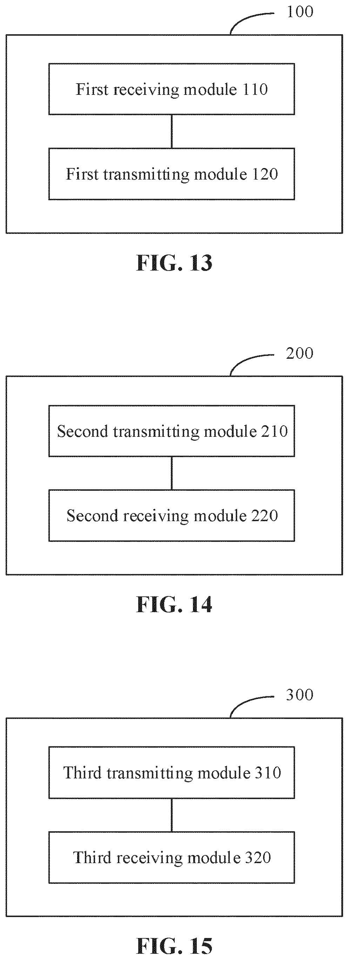

The specific arrangement and implementation of the embodiments of the present disclosure have been described above from different angles through a plurality of embodiments. Corresponding to the processing method of at least one embodiment described above, the embodiment of the present disclosure also provides a terminal device 100. Referring to FIG. 13, the terminal device 100 includes a first receiving module 110 and a first transmitting module 120.

The first receiving module 110 is configured to receive first sidelink data from a second terminal device.

The first transmitting module 120 is configured to transmit first sidelink feedback information corresponding to the first sidelink data to the second terminal device or a third terminal device, the third terminal device including a cluster head terminal corresponding to the second terminal device.

Corresponding to the processing method of at least one embodiment described above, the embodiment of the present disclosure also provides a terminal device 200. Referring to FIG. 14, the terminal device 200 includes a second transmitting module 210 and a second receiving module 220.

The second transmitting module 210 is configured to transmit first sidelink data to a first terminal device.

The second receiving module 220 is configured to receive first sidelink feedback information corresponding to the first sidelink data from the first terminal device and transmit the first sidelink feedback information to a third terminal device; or not expect to receive, by the second terminal device, the first sidelink feedback information corresponding to the first sidelink data from the first terminal device, the third terminal device including a cluster head terminal of a communication group corresponding to the second terminal device.

Corresponding to the processing method of at least one embodiment described above, the embodiment of the present disclosure also provides a terminal device 300. Referring to FIG. 15, the terminal device 300 includes a third transmitting module 310 and a third receiving module 320.

The third transmitting module 310 is configured to transmit indication information of a sidelink transmission resource to a second terminal device, the indication information of the sidelink transmission resource being used to determine the sidelink transmission resource, and the sidelink transmission resource being used for the second terminal device to transmit first sidelink data to the first terminal device.

The third receiving module 320 is configured to receive first sidelink feedback information corresponding to the first sidelink data from the first terminal device or the second terminal device, the third terminal device including a cluster head terminal of a communication group corresponding to the second terminal device.

The terminal devices 100, 200 and 300 of the embodiment of the present disclosure can realize the corresponding functions of the terminal devices in the aforementioned method embodiments, and the corresponding processes, functions, implementation manners and beneficial effects of respective modules (sub-module, unit or component, etc.) in the terminal devices 100, 200 and 300 can refer to the corresponding descriptions in the above method embodiments, and will not be described here.

It should be noted that, the functions described with respect to the respective modules (sub-modules, units or components, etc.) in the terminal devices 100, 200 and 300 of the embodiments of the present disclosure can be realized by different modules (sub-module, unit or component, etc.) or by the same module (sub-module, unit or component, etc.). For example, the first transmitting module and the second transmitting module can be different modules or the same module, and can realize the corresponding functions of the terminal device of the embodiment of the present disclosure.

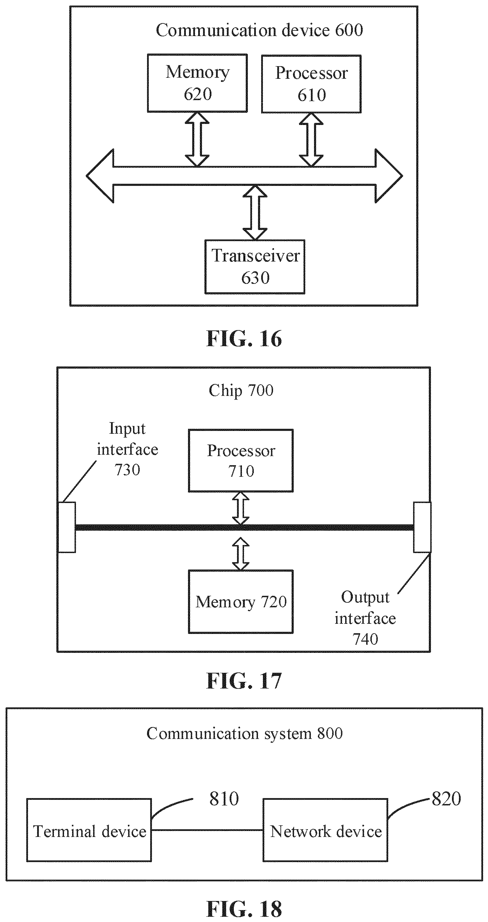

FIG. 16 is a schematic structural diagram of a communication device 600 according to an embodiment of the present disclosure. The communication device 600 includes a processor 610 that can call and run a computer program from memory to execute a method in an embodiment of the present disclosure.

Optionally, the communication device 600 may also include a memory 620. The processor 610 that can call and run a computer program from memory 620 to execute a method in an embodiment of the present disclosure.

The memory 620 may be a separate device independent of the processor 610 or may be integrated in the processor 610.

Optionally, the communication device 600 may also include a transceiver 630, the processor 610 may control the transceiver 630 to communicate with other devices, and in particular may transmit information or data to other devices, or receive information or data transmitted by other devices. The transceiver 630 may include a transmitter and a receiver. The transceiver 630 may further include antennas, and the number of antennas may be one or more.

Optionally, the communication device 600 may be a network device of an embodiment of the present disclosure, and the communication device 600 may implement corresponding processes implemented by the network device in the respective methods of the embodiment of the present disclosure, which will not be repeated here for the sake of brevity.

Optionally, the communication device 600 may be a terminal device of an embodiment of the present disclosure, and the communication device 600 may implement corresponding processes implemented by the terminal device in the respective methods of the embodiment of the present disclosure, which will not be repeated here for the sake of brevity.

FIG. 17 is a schematic structural diagram of a chip 700 according to an embodiment of the present disclosure, the chip 700 includes a processor 710 that can call and run a computer program from memory to execute a method in an embodiment of the present disclosure.

Optionally, the chip 700 may also include a memory 720. The processor 710 that can call and run a computer program from memory 720 to execute a method in an embodiment of the present disclosure.

The memory 720 may be a separate device independent of the processor 710 or may be integrated in the processor 710.

Optionally, the chip 700 may also include an input interface 730. The processor 710 may control the input interface 730 to communicate with other devices or chips, and in particular may obtain information or data transmitted by other devices or chips.

Optionally, the chip 700 may also include an output interface 740. The processor 710 may control the output interface 740 to communicate with other devices or chips, and in particular may output information or data to other devices or chips.

Optionally, the chip may applied to be a network device of an embodiment of the present disclosure, and the chip may implement corresponding processes implemented by the network device in the respective methods of the embodiment of the present disclosure, which will not be repeated here for the sake of brevity.

Optionally, the chip may applied to be a terminal device of an embodiment of the present disclosure such as FIG. 13, FIG. 14 or FIG. 15, and the chip may implement corresponding processes implemented by the terminal device in the respective methods of the embodiment of the present disclosure, which will not be repeated here for the sake of brevity. It should be understood that the chip mentioned in embodiments of the present disclosure may also be referred to as system-level chip, system chip, chip system or system-on-chip or the like.

The processor mentioned above may be a general purpose processor, a digital signal processor (DSP), a field programmable gate array (FPGA), an application specific integrated circuit (ASIC), or other programmable logic devices, transistor logic devices, discrete hardware components, and the like. The general purpose processor mentioned above may be a microprocessor or any conventional processor or the like.

The memory mentioned above may be a volatile memory or a non-volatile memory or may include both a volatile memory and a non-volatile memory. The non-volatile memory may be read-only memory (ROM), programmable ROM (PROM), erasable PROM (EPROM), electrically EPROM (EEPROM) or flash memory. The volatile memory may be a random access memory (RAM).

It should be understood that the memory described above is exemplary but not limiting, for example, the memory in embodiments of the present disclosure may also be static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), direct rambus RAM (DR RAM), etc. That is, the memory in embodiments of the present disclosure is intended to include but not limited to these and any other suitable types of memory.

FIG. 18 is a schematic block diagram of a communication system 800 according to an embodiment of the present disclosure, and the communication system 800 includes a terminal device 810 and a network device 820.

The terminal device 810 may be used to implement corresponding functions implemented by the terminal device in the methods of various embodiments of the present disclosure, and the network device 820 may be used to implement corresponding functions implemented by the network device in the methods of various embodiments of the present disclosure. For brevity, details are not repeated here.

In the above-described embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the flow or function described in accordance with embodiments of the present disclosure is generated in whole or in part. The computer may be a general purpose computer, a special purpose computer, a computer network, or other programmable device. The computer instructions may be stored in a computer-readable storage medium, or from one computer-readable storage medium to another. For example, the computer instructions may be transmitted from a web site, computer, server, or data center to another web site, computer, server, or data center via wired (e.g. coaxial cable, optical fiber, digital subscriber line (DSL)) or wireless (e.g. infrared, wireless, microwave, etc.). The computer-readable storage medium may be any usable medium accessible to a computer or a data storage device containing one or more usable media integration, such as a server, data center, etc. The usable media may be magnetic media (e.g. floppy disk, hard disk, magnetic tape), optical media (e.g. DVD), or semiconductor media (e.g. solid state disk (SSD)), etc.

It should be understood that in various embodiments of the present disclosure, the size of the sequence number of the above-mentioned processes does not mean the order of execution, and the execution order of each process should be determined by its function and inherent logic, and should not be limited in any way to the implementation process of the embodiments of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

The above is only the specific implementation of the present disclosure, but the scope of protection of the present disclosure is not limited thereto. Any person skilled in the art can easily think of changes or substitutions within the technical scope disclosed in the disclosure, which should be covered within the protection scope of the disclosure. Therefore, the scope of protection of the disclosure shall be subject to the scope of protection of the claim.

## Claims

1. A sidelink feedback method, comprising:
receiving, by a first terminal device, first sidelink data from a second terminal device; and
transmitting, by the first terminal device, first sidelink feedback information corresponding to the first sidelink data to the second terminal device or a third terminal device, wherein the third terminal device comprises a cluster head terminal corresponding to the second terminal device.

2. The method of claim 1, further comprising:
acquiring, by the first terminal device, first indication information, the first indication information being used to indicate a manner in which the first terminal device transmits the first sidelink feedback information,
wherein the manner for transmitting the first sidelink feedback information comprises that: the first terminal device transmits the first sidelink feedback information to the second terminal device, or the first terminal device transmits the first sidelink feedback information to the third terminal device.

3. The method of claim 2, wherein acquiring, by the first terminal device, the first indication information comprises at least one of the following manners:
the first indication information is transmitted by the second terminal device to the first terminal device;
the first indication information is transmitted by the third terminal device to the first terminal device;
the first indication information is transmitted by the third terminal device to the second terminal device and is transmitted by the second terminal device to the first terminal device;
the first indication information is configured by a network device;
the first indication information is configured by pre-configuration information; or
the first indication information is configured by resource pool configuration information.

4. The method of any one of claims 1 to 3, wherein
the first sidelink feedback information corresponding to the first sidelink data is transmitted by the first terminal device to the third terminal device, and
the method further comprises:
determining, by the first terminal device, a first sidelink feedback transmission resource, wherein the first sidelink feedback transmission resource is used for the first terminal device to transmit the first sidelink feedback information corresponding to the first sidelink data to the third terminal device through the first sidelink feedback transmission resource.

5. The method of claim 4, wherein determining, by the first terminal device, the first sidelink feedback transmission resource comprises:
determining, by the first terminal device, the first sidelink feedback transmission resource according to a transmission resource for the first sidelink data.

6. The method of claim 5, wherein determining, by the first terminal device, the first sidelink feedback transmission resource according to the transmission resource for the first sidelink data comprises:
determining, by the first terminal device, the first sidelink feedback transmission resource according to at least one of the following information:
time domain resource indication information corresponding to the transmission resource for the first sidelink data;
frequency domain resource indication information corresponding to the transmission resource for the first sidelink data; or
code domain resource indication information corresponding to the transmission resource for the first sidelink data.

7. The method of claim 5 or 6, wherein determining, by the first terminal device, the first sidelink feedback transmission resource according to the transmission resource for the first sidelink data comprises:
determining, by the first terminal device, the first sidelink feedback transmission resource according to at least one of: identification (ID) information of the first terminal device, ID information of the second terminal device, or ID information of the third terminal device.

8. The method of any one of claims 5 to 7, wherein determining, by the first terminal device, the first sidelink feedback transmission resource according to the transmission resource for the first sidelink data comprises:
determining, by the first terminal device, one or more sidelink feedback transmission resources corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data.

9. The method of any one of claims 5 to 8, wherein determining, by the first terminal device, the first sidelink feedback transmission resource according to the transmission resource for the first sidelink data comprises:
determining, by the first terminal device, at least one physical resource block (PRB) corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data; and
determining the transmission resource for transmitting the first sidelink feedback information in the at least one PRB according to at least one of: ID information of the first terminal device, ID information of the second terminal device, or ID information of the third terminal device.

10. The method of any one of claims 5 to 9, wherein
the transmission resource for transmitting the first sidelink feedback information is determined by the first terminal device according to a type of the first sidelink feedback information.

11. The method of any one of claims 5 to 10, wherein
the transmission resource for the first sidelink data comprises a first physical sidelink shared channel (PSSCH);
the first sidelink feedback transmission resource comprises a first physical sidelink feedback channel (PSFCH); and
the first sidelink feedback information is carried in the first PSFCH.

12. The method of claim 4, wherein determining, by the first terminal device, the first sidelink feedback transmission resource comprises:
receiving, by the first terminal device, indication information of a sidelink feedback channel transmission resource from the third terminal device, the indication information of the sidelink feedback channel transmission resource being used to determine the first sidelink feedback transmission resource; and
determining, by the first terminal device, the first sidelink feedback transmission resource according to the indication information of the sidelink feedback channel transmission resource.

13. The method of claim 4, wherein determining, by the first terminal device, the first sidelink feedback transmission resource comprises:
receiving, by the first terminal device, indication information of a sidelink feedback channel transmission resource from the second terminal device, the indication information of the sidelink feedback channel transmission resource being used to determine the first sidelink feedback transmission resource, wherein the indication information of the sidelink feedback channel transmission resource is transmitted by the third terminal device to the second terminal device; and
determining, by the first terminal device, the first sidelink feedback transmission resource according to the indication information of the sidelink feedback channel transmission resource.

14. The method of claim 12 or 13, wherein
the indication information of the sidelink feedback channel transmission resource is carried in at least one of: sidelink control information (SCI), media access control control element (MAC CE) or PC5-radio resource control (RRC) signaling.

15. The method of any one of claims 12 to 14, wherein
the indication information of the sidelink feedback channel transmission resource is carried in SCI at a second stage.

16. The method of any one of claims 12 to 15, wherein
the indication information of the sidelink feedback channel transmission resource comprises at least one of: slot indication information, a slot interval between a slot in which the sidelink feedback channel transmission resource is located and a slot in which the indication information is located, a slot interval between a slot in which the sidelink feedback channel transmission resource is located and a slot in which the first sidelink data is located, a PRB index, an interlaced PRB index, indication information of interlaced PRB pattern, a sub-channel index, channel information, base sequence information, or cyclic shift information.

17. The method of claim 4, wherein determining, by the first terminal device, the first sidelink feedback transmission resource comprises:
selecting, by the first terminal device, the first sidelink feedback transmission resource from a resource set.

18. The method of claim 17, wherein transmitting, by the first terminal device, the first sidelink feedback information corresponding to the first sidelink data to the third terminal device comprises:
transmitting, by the first terminal device, second sidelink data to the third terminal device through the first sidelink feedback transmission resource, the first sidelink feedback information being carried in the second sidelink data.

19. The method of any one of claims 1 to 18, wherein
the first terminal device, the second terminal device and the third terminal device belong to a same communication group.

20. The method of any one of claims 1 to 3, wherein
the first sidelink feedback information corresponding to the first sidelink data is transmitted by the first terminal device to the second terminal device, and
the method further comprises that: the second terminal device transmits the first sidelink feedback information to the third terminal device.

21. The method of claim 20, further comprising:
transmitting, by the first terminal device, the first sidelink feedback information to the second terminal device through a second sidelink feedback transmission resource; and
transmitting, by the second terminal device, the first sidelink feedback information to the third terminal device through a third sidelink feedback transmission resource;
wherein the second sidelink feedback transmission resource is a transmission resource determined in a first sidelink feedback transmission resource set according to a transmission resource for the first sidelink data, and/or the second sidelink feedback transmission resource is a transmission resource determined in the first sidelink feedback transmission resource set according to a third sidelink feedback transmission resource; and
the third sidelink feedback transmission resource is a transmission resource determined in a second sidelink feedback transmission resource set according to the transmission resource for the first sidelink data, and/or the third sidelink feedback transmission resource is a transmission resource determined in the second sidelink feedback transmission resource set according to a second sidelink feedback transmission resource.

22. The method of claim 21, wherein
the second sidelink feedback transmission resource and the third sidelink feedback transmission resource are located in different slots.

23. The method of claim 21 or 22, wherein
the second sidelink feedback transmission resource is a transmission resource determined in the first sidelink feedback transmission resource set according to at least one of: ID information of the first terminal device or ID information of the second terminal device; and/or
the third sidelink feedback transmission resource is a transmission resource determined in the second sidelink feedback transmission resource set according to at least one of: the ID information of the first terminal device, the ID information of the second terminal device or ID information of the third terminal device.

24. The method of any one of claims 21 to 23, wherein
the first sidelink feedback transmission resource set is configured by a network device; and/or
the second sidelink feedback transmission resource set is configured by the network device; and/or
the first sidelink feedback transmission resource set is configured by pre-configuration information; and/or
the second sidelink feedback transmission resource set is configured by the pre-configuration information; and/or
the first sidelink feedback transmission resource set is configured by the third terminal device; and/or
the second sidelink feedback transmission resource set is configured by the third terminal device.

25. The method of any one of claims 21 to 24, wherein
the second sidelink feedback transmission resource is a transmission resource selected from the first sidelink feedback transmission resource set according to a type of the first sidelink feedback information; and/or,
the third sidelink feedback transmission resource is a transmission resource selected from the second sidelink feedback transmission resource set according to the type of the first sidelink feedback information.

26. The method of claim 20, wherein
the first sidelink feedback information is transmitted by the first terminal device to the second terminal device through a second sidelink feedback transmission resource;
the first sidelink feedback information is transmitted by the second terminal device to the third terminal device through a third sidelink feedback transmission resource, and
wherein at least one of the second sidelink feedback transmission resource or the third sidelink feedback transmission resource is determined by the third terminal device.

27. The method of claim 26, wherein
the second sidelink feedback transmission resource and the third sidelink feedback transmission resource are transmitted by the third terminal device to the second terminal device, and the second sidelink feedback transmission resource is transmitted by the second terminal device to the first terminal device.

28. The method of claim 26, wherein
the second sidelink feedback transmission resource is transmitted by the third terminal device to the first terminal device, and the third sidelink feedback transmission resource is transmitted by the third terminal device to the second terminal device.

29. The method of claim 26, wherein
the second sidelink feedback transmission resource is transmitted by the third terminal device to the second terminal device and is transmitted by the second terminal device to the first terminal device; and
the third sidelink feedback transmission resource is determined by the second terminal device according to a transmission resource for the first sidelink data.

30. The method of claim 26, wherein
the third sidelink feedback transmission resource is transmitted by the third terminal device to the second terminal device; and
the second sidelink feedback transmission resource is determined by the first terminal device according to a transmission resource for the first sidelink data.

31. The method of any one of claims 21 to 30, wherein
the transmission resource for the first sidelink data comprises a second PSSCH,
the second sidelink feedback transmission resource comprises a second PSFCH,
the third sidelink feedback transmission resource comprises a third PSFCH, and
the first sidelink feedback information is carried in the second PSFCH and the third PSFCH.

32. The method of claim 7, 9 or 23, wherein the ID information comprises at least one of: radio network temporary identity (RNTI) information of a terminal device or in-group ID information of the terminal device within a communication group.

33. A sidelink feedback method, comprising:
transmitting, by a second terminal device, first sidelink data to a first terminal device; and
receiving, by the second terminal device, first sidelink feedback information corresponding to the first sidelink data from the first terminal device, and transmitting, by the second terminal device, the first sidelink feedback information to a third terminal device; or not expecting to receive, by the second terminal device, the first sidelink feedback information corresponding to the first sidelink data from the first terminal device,
wherein the third terminal device comprises a cluster head terminal of a communication group corresponding to the second terminal device.

34. The method of claim 33, further comprising:
transmitting, by the second terminal device, first indication information to the first terminal device, or
receiving, by the second terminal device, the first indication information from the third terminal device, and transmitting, by the second terminal device, the first indication information to the first terminal device,
wherein the first indication information is used to indicate a manner in which the first terminal device transmits the first sidelink feedback information; and the manner for transmitting the first sidelink feedback information comprises that: the first terminal device transmits the first sidelink feedback information to the second terminal device, or the first terminal device transmits the first sidelink feedback information to the third terminal device.

35. The method of claim 33, further comprising: acquiring, by the second terminal device, first indication information,
wherein the first indication information is configured by a network device; or
the first indication information is configured by pre-configuration information; or
the first indication information is configured by resource pool configuration information,
wherein the first indication information is used to indicate a manner in which the first terminal device transmits the first sidelink feedback information; and the manner for transmitting the first sidelink feedback information comprises that: the first terminal device transmits the first sidelink feedback information to the second terminal device, or the first terminal device transmits the first sidelink feedback information to the third terminal device.

36. The method of any one of claims 33 to 35, wherein
in response to not expecting to receive, by the second terminal device, the first sidelink feedback information corresponding to the first sidelink data from the first terminal device,
receiving, by the second terminal device, indication information of a sidelink feedback channel transmission resource from the third terminal device, and transmitting, by the second terminal device, the indication information of the sidelink feedback channel transmission resource to the first terminal device,
wherein the indication information of the sidelink feedback channel transmission resource is used for determining the first sidelink feedback transmission resource, the first sidelink feedback transmission resource is used for the first terminal device to transmit the first sidelink feedback information to the third terminal device through the first sidelink feedback transmission resource.

37. The method of claim 36, wherein
the indication information of the sidelink feedback channel transmission resource is carried in at least one of: sidelink control information (SCI), media access control control element (MAC CE) or PC5-radio resource control (RRC) signaling.

38. The method of claim 36, wherein
the indication information of the sidelink feedback channel transmission resource is carried in SCI at a second stage.

39. The method of any one of claims 36 to 38, wherein
the indication information of the sidelink feedback channel transmission resource comprises at least one of: slot indication information, a slot interval between a slot in which the sidelink feedback channel transmission resource is located and a slot in which the indication information is located, a slot interval between a slot in which the sidelink feedback channel transmission resource is located and a slot in which the first sidelink data is located, a PRB index, an interlaced PRB index, indication information of interlaced PRB pattern, a sub-channel index, channel information, base sequence information, or cyclic shift information.

40. The method of any one of claims 33 to 35, wherein
the second terminal device receives the first sidelink feedback information from the first terminal device through a second sidelink feedback transmission resource and transmits the first sidelink feedback information to the third terminal device through a third sidelink feedback transmission resource;
wherein the second sidelink feedback transmission resource is a transmission resource determined in a first sidelink feedback transmission resource set according to a transmission resource for the first sidelink data, and/or the second sidelink feedback transmission resource is a transmission resource determined in the first sidelink feedback transmission resource set according to a third sidelink feedback transmission resource; and
the third sidelink feedback transmission resource is a transmission resource determined in a second sidelink feedback transmission resource set according to the transmission resource for the first sidelink data, and/or the third sidelink feedback transmission resource is a transmission resource determined in the second sidelink feedback transmission resource set according to a second sidelink feedback transmission resource.

41. The method of claim 40, wherein
the second sidelink feedback transmission resource is a transmission resource determined in the first sidelink feedback transmission resource set according to at least one of: ID information of the first terminal device or ID information of the second terminal device; and/or
the third sidelink feedback transmission resource is a transmission resource determined in the second sidelink feedback transmission resource set according to at least one of: the ID information of the first terminal device, the ID information of the second terminal device or ID information of the third terminal device.

42. The method of claim 40 or 41, wherein
the second sidelink feedback transmission resource is a transmission resource selected from the first sidelink feedback transmission resource set according to a type of the first sidelink feedback information; and/or,
the third sidelink feedback transmission resource is a transmission resource selected from the second sidelink feedback transmission resource set according to the type of the first sidelink feedback information.

43. The method of any one of claims 40 to 42, wherein
the first sidelink feedback transmission resource set is configured by a network device; and/or
the second sidelink feedback transmission resource set is configured by the network device; and/or
the first sidelink feedback transmission resource set is configured by pre-configuration information; and/or
the second sidelink feedback transmission resource set is configured by the pre-configuration information; and/or
the first sidelink feedback transmission resource set is configured by the third terminal device; and/or
the second sidelink feedback transmission resource set is configured by the third terminal device.

44. The method of any one of claims 33 to 35, wherein
the first sidelink feedback information is received by the second terminal device from the first terminal device through a second sidelink feedback transmission resource and is transmitted by the second terminal device to the third terminal device through a third sidelink feedback transmission resource,
wherein at least one of the second sidelink feedback transmission resource or the third sidelink feedback transmission resource is determined by the third terminal device.

45. The method of claim 44, wherein
information of the second sidelink feedback transmission resource and information of the third sidelink feedback transmission resource are transmitted by the third terminal device to the second terminal device, and the information of the second sidelink feedback transmission resource is transmitted by the second terminal device to the first terminal device.

46. The method of claim 44, wherein
information of the second sidelink feedback transmission resource is transmitted by the third terminal device to the first terminal device, and information of the third sidelink feedback transmission resource is transmitted by the third terminal device to the second terminal device.

47. The method of claim 44, wherein
information of the second sidelink feedback transmission resource is transmitted by the third terminal device to the second terminal device and is transmitted by the second terminal device to the first terminal device; and
the third sidelink feedback transmission resource is determined by the second terminal device according to a transmission resource for the first sidelink data.

48. The method of claim 47, wherein determining, by the second terminal device, the third sidelink feedback transmission resource according to the transmission resource for the first sidelink data comprises:
determining, by the second terminal device, the third sidelink feedback transmission resource according to at least one of the following information:
time domain resource indication information corresponding to the transmission resource for the first sidelink data;
frequency domain resource indication information corresponding to the transmission resource for the first sidelink data; or
code domain resource indication information corresponding to the transmission resource for the first sidelink data.

49. The method of claim 47, wherein determining, by the second terminal device, the third sidelink feedback transmission resource according to the transmission resource for the first sidelink data comprises:
determining, by the second terminal device, the third sidelink feedback transmission resource according to at least one of: identification (ID) information of the first terminal device, ID information of the second terminal device, or ID information of the third terminal device.

50. The method of claim 47, wherein determining, by the second terminal device, the third sidelink feedback transmission resource according to the transmission resource for the first sidelink data comprises:
determining, by the second terminal device, one or more sidelink feedback transmission resources corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data.

51. The method of claim 47, wherein determining, by the second terminal device, the third sidelink feedback transmission resource according to the transmission resource for the first sidelink data comprises:
determining, by the second terminal device, at least one physical resource block (PRB) corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data; and
determining the transmission resource for transmitting the first sidelink feedback information in the at least one PRB according to at least one of: ID information of the first terminal device, ID information of the second terminal device, or ID information of the third terminal device.

52. The method of claim 44, wherein
information of the third sidelink feedback transmission resource is transmitted by the third terminal device to the second terminal device; and
the second sidelink feedback transmission resource is determined by the second terminal device according to a transmission resource for the first sidelink data.

53. The method of claim 52, wherein determining, by the second terminal device, the second sidelink feedback transmission resource according to the transmission resource for the first sidelink data comprises:
determining, by the second terminal device, the second sidelink feedback transmission resource according to at least one of the following information:
time domain resource indication information corresponding to the transmission resource for the first sidelink data;
frequency domain resource indication information corresponding to the transmission resource for the first sidelink data; or
code domain resource indication information corresponding to the transmission resource for the first sidelink data.

54. The method of claim 52, wherein determining, by the second terminal device, the second sidelink feedback transmission resource according to the transmission resource for the first sidelink data comprises:
determining, by the second terminal device, the third sidelink feedback transmission resource according to at least one of: identification (ID) information of the first terminal device, ID information of the second terminal device, or ID information of the third terminal device.

55. The method of claim 52, wherein determining, by the second terminal device, the second sidelink feedback transmission resource according to the transmission resource for the first sidelink data comprises:
determining, by the second terminal device, one or more sidelink feedback transmission resources corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data.

56. The method of claim 52, wherein determining, by the second terminal device, the second sidelink feedback transmission resource according to the transmission resource for the first sidelink data comprises:
determining, by the second terminal device, at least one PRB corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data; and
determining the transmission resource for transmitting the first sidelink feedback information in the at least one PRB according to at least one of: ID information of the first terminal device, ID information of the second terminal device, or ID information of the third terminal device.

57. The method of any one of claims 40 to 56, wherein
the transmission resource for the first sidelink data comprises a second PSSCH,
the second sidelink feedback transmission resource comprises a second PSFCH,
the third sidelink feedback transmission resource comprises a third PSFCH, and
the first sidelink feedback information is carried in the second PSFCH and the third PSFCH.

58. The method of claim 41, 49, 51, 54 or 56, wherein the ID information comprises at least one of: radio network temporary identity (RNTI) information of the terminal device or in-group ID information of the terminal device within a communication group.

59. The method of any one of claims 33 to 58, wherein
the first terminal device and the second terminal device belong to different communication groups.

60. A sidelink feedback method, comprising:
transmitting, by a third terminal device, indication information of a sidelink transmission resource to a second terminal device, wherein the indication information of the sidelink transmission resource is used to determine the sidelink transmission resource, and the sidelink transmission resource is used for the second terminal device to transmit first sidelink data to the first terminal device; and
receiving, by the third terminal device, first sidelink feedback information corresponding to the first sidelink data from the first terminal device or the second terminal device,
wherein the third terminal device comprises a cluster head terminal of a communication group corresponding to the second terminal device.

61. The method of claim 60, further comprising:
transmitting, by the third terminal device, first indication information to the first terminal device, or
transmitting, by the third terminal device, the first indication information to the second terminal device, the first indication information being transmitted by the second terminal device to the first terminal device,
wherein the first indication information is used to indicate a manner in which the first terminal device transmits the first sidelink feedback information; and the manner for transmitting the first sidelink feedback information comprises that: the first terminal device transmits the first sidelink feedback information to the second terminal device, or the first terminal device transmits the first sidelink feedback information to the third terminal device.

62. The method of claim 60, further comprising: acquiring, by the third terminal device, first indication information,
wherein the first indication information is configured by a network device; or
the first indication information is configured by pre-configuration information; or
the first indication information is configured by resource pool configuration information, and
wherein the first indication information is used to indicate a manner in which the first terminal device transmits the first sidelink feedback information; and the manner for transmitting the first sidelink feedback information comprises that: the first terminal device transmits the first sidelink feedback information to the second terminal device, or the first terminal device transmits the first sidelink feedback information to the third terminal device.

63. The method of any one of claims 60 to 62, wherein
receiving, by the third terminal device, first sidelink feedback information corresponding to the first sidelink data transmitted by the first terminal device through first sidelink feedback transmission resource, wherein the first sidelink feedback transmission resource is determined by the first terminal device according to a transmission resource for the first sidelink data.

64. The method of any one of claims 60 to 62, further comprising:
transmitting, by the third terminal device, indication information of a sidelink feedback channel transmission resource to the first terminal device, wherein the indication information of the sidelink feedback channel transmission resource is used for the first terminal device to determine the first sidelink feedback transmission resource.

65. The method of any one of claims 60 to 62, further comprising:
transmitting, by the third terminal device, indication information of a sidelink feedback channel transmission resource to the second terminal device and transmitting, by the second terminal device, the indication information of the sidelink feedback channel transmission resource to the first terminal device, wherein the indication information of the sidelink feedback channel transmission resource is used for the first terminal device to determine the first sidelink feedback transmission resource.

66. The method of claim 64 or 65, wherein
the indication information of the sidelink feedback channel transmission resource is carried in at least one of: sidelink control information (SCI), media access control control element (MAC CE) or PC5-radio resource control (RRC) signaling.

67. The method of claim 64 or 65, wherein
the indication information of the sidelink feedback channel transmission resource is carried in SCI at a second stage I.

68. The method of claim 64 or 65, wherein
the indication information of the sidelink feedback channel transmission resource comprises at least one of: slot indication information, a slot interval between a slot in which the sidelink feedback channel transmission resource is located and a slot in which the indication information is located, a slot interval between a slot in which the sidelink feedback channel transmission resource is located and a slot in which the first sidelink data is located, a PRB index, an interlaced PRB index, indication information of interlaced PRB pattern, a sub-channel index, channel information, base sequence information, or cyclic shift information.

69. The method of any one of claims 60 to 62, wherein receiving, by the third terminal device, the first sidelink feedback information corresponding to the first sidelink data from the first terminal device comprises:
receiving, by the third terminal device, second sidelink data transmitted by the first terminal device through the first sidelink feedback transmission resource, the first sidelink feedback information being carried in the second sidelink data, and the first sidelink feedback transmission resource being selected by the first terminal device in a resource set.

70. The method of any one of claims 60 to 62, wherein
the third terminal device receives the first sidelink feedback information corresponding to the first sidelink data from the second terminal device through a third sidelink feedback transmission resource, wherein the first sidelink feedback information is transmitted by the first terminal device to the second terminal device through a second sidelink feedback transmission resource;
wherein the second sidelink feedback transmission resource is a transmission resource determined in a first sidelink feedback transmission resource set according to a transmission resource for the first sidelink data, and/or the second sidelink feedback transmission resource is a transmission resource determined in the first sidelink feedback transmission resource set according to a third sidelink feedback transmission resource; and
the third sidelink feedback transmission resource is a transmission resource determined in a second sidelink feedback transmission resource set according to the transmission resource for the first sidelink data, and/or the third sidelink feedback transmission resource is a transmission resource determined in the second sidelink feedback transmission resource set according to a second sidelink feedback transmission resource.

71. The method of claim 70, wherein
the second sidelink feedback transmission resource and the third sidelink feedback transmission resource are located in different slots.

72. The method of claim 70 or 71, wherein
the second sidelink feedback transmission resource is a transmission resource determined in the first sidelink feedback transmission resource set according to at least one of: ID information of the first terminal device or ID information of the second terminal device; and/or
the third sidelink feedback transmission resource is a transmission resource determined in the second sidelink feedback transmission resource set according to at least one of: the ID information of the first terminal device, the ID information of the second terminal device or ID information of the third terminal device.

73. The method of any one of claims 70 to 72, wherein
the second sidelink feedback transmission resource is a transmission resource selected from the first sidelink feedback transmission resource set according to a type of the first sidelink feedback information; and/or,
the third sidelink feedback transmission resource is a transmission resource selected from the second sidelink feedback transmission resource set according to the type of the first sidelink feedback information.

74. The method of any one of claims 70 to 73, wherein
the first sidelink feedback transmission resource set is configured by a network device; and/or
the second sidelink feedback transmission resource set is configured by the network device; and/or
the first sidelink feedback transmission resource set is configured by pre-configuration information; and/or
the second sidelink feedback transmission resource set is configured by the pre-configuration information; and/or
the first sidelink feedback transmission resource set is configured by the third terminal device; and/or
the second sidelink feedback transmission resource set is configured by the third terminal device.

75. The method of any one of claims 60 to 62, wherein
the third terminal device receives the first sidelink feedback information corresponding to the first sidelink data from the second terminal device through a third sidelink feedback transmission resource, wherein the first sidelink feedback information is transmitted by the first terminal device to the second terminal device through a second sidelink feedback transmission resource;
wherein at least one of the second sidelink feedback transmission resource or the third sidelink feedback transmission resource is determined by the third terminal device.

76. The method of claim 75, wherein
the third terminal device transmits indication information of the second sidelink feedback transmission resource and indication information of the third sidelink feedback transmission resource to the second terminal device, and wherein the indication information of the second sidelink feedback transmission resource is transmitted by the second terminal device to the first terminal device, the indication information of the second sidelink feedback transmission resource is used to determine the second sidelink feedback transmission resource, and the indication information of the third sidelink feedback transmission resource is used to determine the third sidelink feedback transmission resource.

77. The method of claim 75, wherein
the third terminal device transmits indication information of the second sidelink feedback transmission resource to the first terminal device, the third terminal device transmits indication information of the third sidelink feedback transmission resource to the second terminal device, and wherein the indication information of the second sidelink feedback transmission resource is used to determine the second sidelink feedback transmission resource, and the indication information of the third sidelink feedback transmission resource is used to determine the third sidelink feedback transmission resource.

78. The method of claim 75, wherein
the third terminal device transmits indication information of the second sidelink feedback transmission resource to the second terminal device, the second terminal device transmits indication information of the second sidelink feedback transmission resource to the first terminal device, and wherein the indication information of the second sidelink feedback transmission resource is used to determine the second sidelink feedback transmission resource; and
the third sidelink feedback transmission resource is determined by the second terminal device according to a transmission resource for the first sidelink data.

79. The method of claim 75, wherein
the third terminal device transmits indication information of the third sidelink feedback transmission resource to the second terminal device, and wherein the indication information of the third sidelink feedback transmission resource is used to determine the third sidelink feedback transmission resource; and
the second sidelink feedback transmission resource is determined by the first terminal device according to a transmission resource for the first sidelink data.

80. The method of any one of claims 76 to 79, wherein
the third terminal device transmits the indication information of the sidelink feedback transmission resource to the first terminal device and/or the second terminal device in at least one of the following manners:
the third terminal device transmits time domain resource indication information corresponding to the sidelink feedback transmission resource, wherein the time domain resource indication information comprises: slot indication information and/or slot interval between time domain position of the sidelink feedback transmission resource and time domain position of sidelink data transmission resource;
the third terminal device transmits frequency domain resource indication information corresponding to the sidelink feedback transmission resource, wherein the frequency domain resource indication information comprises: a PRB index used to determine frequency domain position of the sidelink feedback transmission resource, a sub-channel index and/ or an interlaced PRB index;
the third terminal device transmits code domain resource indication information corresponding to the sidelink feedback transmission resource; and
the third terminal device transmits a resource index value, wherein the resource index value is used to determine the sidelink feedback transmission resource corresponding to the resource index value in a sidelink feedback transmission resource set.

81. The method of any one of claims 70 to 80, wherein
the transmission resource for the first sidelink data comprises a second PSSCH,
the second sidelink feedback transmission resource comprises a second PSFCH,
the third sidelink feedback transmission resource comprises a third PSFCH, and
the first sidelink feedback information is carried in the second PSFCH and the third PSFCH.

82. The method of claim 72, wherein the ID information comprises at least one of: radio network temporary identity (RNTI) information of the terminal device or in-group ID information of the terminal device within a communication group.

83. The method of any one of claims 60 to 82, wherein
the first terminal device and the second terminal device belong to different communication groups.

84. A terminal device, comprising:
a first receiving module, configured to receive first sidelink data from a second terminal device; and
a first transmitting module, configured to transmit first sidelink feedback information corresponding to the first sidelink data to the second terminal device or a third terminal device, wherein the third terminal device comprises a cluster head terminal corresponding to the second terminal device.

85. The terminal device of claim 84, further comprising:
indication information acquiring module, configured to acquire first indication information, the first indication information being used to indicate a manner in which the first terminal device transmits the first sidelink feedback information,
wherein the manner for transmitting the first sidelink feedback information comprises that: the first terminal device transmits the first sidelink feedback information to the second terminal device, or the first terminal device transmits the first sidelink feedback information to the third terminal device.

86. The terminal device of claim 85, wherein the indication information acquiring module acquires the first indication information by using at least one of the following manners:
the first indication information is transmitted by the second terminal device to the first terminal device;
the first indication information is transmitted by the third terminal device to the first terminal device;
the first indication information is transmitted by the third terminal device to the second terminal device and is transmitted by the second terminal device to the first terminal device;
the first indication information is configured by a network device;
the first indication information is configured by pre-configuration information; or
the first indication information is configured by resource pool configuration information.

87. The terminal device of any one of claims 84 to 86, wherein
the first transmitting module is configured to transmit the first sidelink feedback information corresponding to the first sidelink data to the third terminal device, and the terminal device further comprises:
a determining module, configured to determine a first sidelink feedback transmission resource, wherein the first sidelink feedback transmission resource is used for the first terminal device to transmit the first sidelink feedback information corresponding to the first sidelink data to the third terminal device through the first sidelink feedback transmission resource.

88. The terminal device of claim 87, wherein the determining module comprises:
a first determining sub-module, configured to determine the first sidelink feedback transmission resource according to a transmission resource for the first sidelink data.

89. The terminal device of claim 88, wherein the first determining sub-module comprises:
a first determining unit, configured to determine the first sidelink feedback transmission resource according to at least one of the following information:
time domain resource indication information corresponding to the transmission resource for the first sidelink data;
frequency domain resource indication information corresponding to the transmission resource for the first sidelink data; or
code domain resource indication information corresponding to the transmission resource for the first sidelink data.

90. The terminal device of claim 88 or 89, wherein the first determining sub-module comprises:
a second determining unit, configured to determine the first sidelink feedback transmission resource according to at least one of: identification (ID) information of the first terminal device, ID information of the second terminal device, or ID information of the third terminal device.

91. The terminal device of any one of claims 88 to 90, wherein the first determining sub-module comprises:
a third determining unit, configured to determine one or more sidelink feedback transmission resources corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data.

92. The terminal device of any one of claims 88 to 91, wherein the first determining sub-module comprises:
a fourth determining unit, configured to determine at least one physical resource block (PRB) corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data; and
determine the transmission resource for transmitting the first sidelink feedback information in the at least one PRB according to at least one of: ID information of the first terminal device, ID information of the second terminal device, or ID information of the third terminal device.

93. The terminal device of any one of claims 88 to 92, wherein the first determining sub-module comprises:
a fifth determining unit, configured to determine the transmission resource for transmitting the first sidelink feedback information according to a type of the first sidelink feedback information.

94. The terminal device of any one of claims 88 to 93, wherein
the transmission resource for the first sidelink data comprises a first physical sidelink shared channel (PSSCH);
the first sidelink feedback transmission resource comprises a first physical sidelink feedback channel (PSFCH); and
the first sidelink feedback information is carried in the first PSFCH.

95. The terminal device of claim 87, wherein the determining module comprises:
a first receiving sub-module, configured to receive indication information of a sidelink feedback channel transmission resource from the third terminal device, the indication information of the sidelink feedback channel transmission resource being used to determine the first sidelink feedback transmission resource; and
a second determining sub-module, configured to determine the first sidelink feedback transmission resource according to the indication information of the sidelink feedback channel transmission resource.

96. The terminal device of claim 87, wherein the determining module comprises:
a second receiving sub-module, configured to receive indication information of a sidelink feedback channel transmission resource from the second terminal device, the indication information of the sidelink feedback channel transmission resource being used to determine the first sidelink feedback transmission resource, wherein the indication information of the sidelink feedback channel transmission resource is transmitted by the third terminal device to the second terminal device; and
a third determining sub-module, configured to determine the first sidelink feedback transmission resource according to the indication information of the sidelink feedback channel transmission resource.

97. The terminal device of claim 95 or 96, wherein
the indication information of the sidelink feedback channel transmission resource is carried in at least one of: sidelink control information (SCI), media access control control element (MAC CE) or PC5-radio resource control (RRC) signaling.

98. The terminal device of any one of claims 95 to 97, wherein
the indication information of the sidelink feedback channel transmission resource is carried in SCI at a second stage.

99. The terminal device of any one of claims 95 to 98, wherein
the indication information of the sidelink feedback channel transmission resource comprises at least one of: slot indication information, a slot interval between a slot in which the sidelink feedback channel transmission resource is located and a slot in which the indication information is located, a slot interval between a slot in which the sidelink feedback channel transmission resource is located and a slot in which the first sidelink data is located, a PRB index, an interlaced PRB index, indication information of interlaced PRB pattern, a sub-channel index, channel information, base sequence information, or cyclic shift information.

100. The terminal device of claim 87, wherein the determining module comprises:
a fourth determining sub-module, configured to select the first sidelink feedback transmission resource from a resource set.

101. The terminal device of claim 100, wherein the first transmitting module comprises:
a first transmitting sub-module, configured to transmit second sidelink data to the third terminal device through the first sidelink feedback transmission resource, the first sidelink feedback information being carried in the second sidelink data.

102. The terminal device of any one of claims 84 to 101, wherein
the first terminal device, the second terminal device and the third terminal device belong to a same communication group.

103. The terminal device of any one of claims 84 to 101, wherein
the first transmitting module is configured to transmit the first sidelink feedback information corresponding to the first sidelink data to the second terminal device, and the second terminal device is configured to transmit the first sidelink feedback information to the third terminal device.

104. The terminal device of claim 103, wherein the first transmitting module comprises:
a second transmitting sub-module, configured to transmit the first sidelink feedback information to the second terminal device through a second sidelink feedback transmission resource; the second terminal device being configured to transmit the first sidelink feedback information to the third terminal device through a third sidelink feedback transmission resource;
wherein the second sidelink feedback transmission resource is a transmission resource determined in a first sidelink feedback transmission resource set according to a transmission resource for the first sidelink data, and/or the second sidelink feedback transmission resource is a transmission resource determined in the first sidelink feedback transmission resource set according to a third sidelink feedback transmission resource; and
the third sidelink feedback transmission resource is a transmission resource determined in a second sidelink feedback transmission resource set according to the transmission resource for the first sidelink data, and/or the third sidelink feedback transmission resource is a transmission resource determined in the second sidelink feedback transmission resource set according to a second sidelink feedback transmission resource.

105. The terminal device of claim 104, wherein
the second sidelink feedback transmission resource and the third sidelink feedback transmission resource are located in different slots.

106. The terminal device of claim 104 or 105, wherein
the second sidelink feedback transmission resource is a transmission resource determined in the first sidelink feedback transmission resource set according to at least one of: ID information of the first terminal device or ID information of the second terminal device; and/or
the third sidelink feedback transmission resource is a transmission resource determined in the second sidelink feedback transmission resource set according to at least one of: the ID information of the first terminal device, the ID information of the second terminal device or ID information of the third terminal device.

107. The terminal device of any one of claims 104 to 106, wherein
the first sidelink feedback transmission resource set is configured by a network device; and/or
the second sidelink feedback transmission resource set is configured by the network device; and/or
the first sidelink feedback transmission resource set is configured by pre-configuration information; and/or
the second sidelink feedback transmission resource set is configured by the pre-configuration information; and/or
the first sidelink feedback transmission resource set is configured by the third terminal device; and/or
the second sidelink feedback transmission resource set is configured by the third terminal device.

108. The terminal device of any one of claims 104 to 107, wherein
the second sidelink feedback transmission resource is a transmission resource selected from the first sidelink feedback transmission resource set according to a type of the first sidelink feedback information; and/or,
the third sidelink feedback transmission resource is a transmission resource selected from the second sidelink feedback transmission resource set according to the type of the first sidelink feedback information.

109. The terminal device of claim 103, wherein the first transmitting module comprises:
a third transmitting sub-module, configured to transmit the first sidelink feedback information to the second terminal device through a second sidelink feedback transmission resource; the second terminal device being configured to transmit the first sidelink feedback information to the third terminal device through a third sidelink feedback transmission resource,
wherein at least one of the second sidelink feedback transmission resource or the third sidelink feedback transmission resource is determined by the third terminal device.

110. The terminal device of claim 109, wherein
the second sidelink feedback transmission resource and the third sidelink feedback transmission resource are transmitted by the third terminal device to the second terminal device, and the second sidelink feedback transmission resource is transmitted by the second terminal device to the first terminal device.

111. The terminal device of claim 109, wherein
the second sidelink feedback transmission resource is transmitted by the third terminal device to the first terminal device, and the third sidelink feedback transmission resource is transmitted by the third terminal device to the second terminal device.

112. The terminal device of claim 109, wherein
the second sidelink feedback transmission resource is transmitted by the third terminal device to the second terminal device and is transmitted by the second terminal device to the first terminal device; and
the third sidelink feedback transmission resource is determined by the second terminal device according to a transmission resource for the first sidelink data.

113. The terminal device of claim 109, wherein
the third sidelink feedback transmission resource is transmitted by the third terminal device to the second terminal device; and
the second sidelink feedback transmission resource is determined by the first terminal device according to a transmission resource for the first sidelink data.

114. The terminal device of any one of claims 104 to 113, wherein
the transmission resource for the first sidelink data comprises a second PSSCH,
the second sidelink feedback transmission resource comprises a second PSFCH,
the third sidelink feedback transmission resource comprises a third PSFCH, and
the first sidelink feedback information is carried in the second PSFCH and the third PSFCH.

115. The terminal device of claim 90, 92 or 106, wherein the ID information comprises at least one of: radio network temporary identity (RNTI) information of a terminal device or in-group ID information of the terminal device within a communication group.

116. A terminal device, comprising:
a second transmitting module, configured to transmit first sidelink data to a first terminal device; and
a second receiving module, configured to receive first sidelink feedback information corresponding to the first sidelink data from the first terminal device and transmit the first sidelink feedback information to a third terminal device; or not expect to receive the first sidelink feedback information corresponding to the first sidelink data from the first terminal device,
wherein the third terminal device comprises a cluster head terminal of a communication group corresponding to the second terminal device.

117. The terminal device of claim 116, further comprising:
indication information transmitting module, configured to transmit first indication information to the first terminal device, or
indication information processing module, configured to receive the first indication information from the third terminal device, and transmit the first indication information to the first terminal device,
wherein the first indication information is used to indicate a manner in which the first terminal device transmits the first sidelink feedback information; and the manner for transmitting the first sidelink feedback information comprises that: the first terminal device transmits the first sidelink feedback information to the second terminal device, or the first terminal device transmits the first sidelink feedback information to the third terminal device.

118. The terminal device of claim 116, further comprising:
indication information acquiring module, configured to acquire first indication information;
wherein the first indication information is configured by a network device; or
the first indication information is configured by pre-configuration information; or
the first indication information is configured by resource pool configuration information, and
wherein the first indication information is used to indicate a manner in which the first terminal device transmits the first sidelink feedback information; and the manner for transmitting the first sidelink feedback information comprises that: the first terminal device transmits the first sidelink feedback information to the second terminal device, or the first terminal device transmits the first sidelink feedback information to the third terminal device.

119. The terminal device of any one of claims 116 to 118, wherein
the second receiving module does not expect to receive the first sidelink feedback information corresponding to the first sidelink data from the first terminal device, and the second receiving module comprises:
a first receiving sub-module, configured to receive indication information of a sidelink feedback channel transmission resource from the third terminal device, and
a first transmitting sub-module, configured to transmit the indication information of the sidelink feedback channel transmission resource to the first terminal device,
wherein the indication information of the sidelink feedback channel transmission resource is used for determining the first sidelink feedback transmission resource, the first sidelink feedback transmission resource is used for the first terminal device to transmit the first sidelink feedback information to the third terminal device through the first sidelink feedback transmission resource.

120. The terminal device of claim 119, wherein
the indication information of the sidelink feedback channel transmission resource is carried in at least one of: sidelink control information (SCI), media access control control element (MAC CE) or PC5-radio resource control (RRC) signaling.

121. The terminal device of claim 119, wherein
the indication information of the sidelink feedback channel transmission resource is carried in SCI at a second stage.

122. The terminal device of any one of claims 119 to 121, wherein
the indication information of the sidelink feedback channel transmission resource comprises at least one of: slot indication information, a slot interval between a slot in which the sidelink feedback channel transmission resource is located and a slot in which the indication information is located, a slot interval between a slot in which the sidelink feedback channel transmission resource is located and a slot in which the first sidelink data is located, a PRB index, an interlaced PRB index, indication information of interlaced PRB pattern, a sub-channel index, channel information, base sequence information, or cyclic shift information.

123. The terminal device of any one of claims 116 to 118, wherein the second receiving module comprises:
a second receiving sub-module, configured to receive the first sidelink feedback information from the first terminal device through a second sidelink feedback transmission resource and
a second transmitting sub-module, configured to transmit the first sidelink feedback information to the third terminal device through a third sidelink feedback transmission resource;
wherein the second sidelink feedback transmission resource is a transmission resource determined in a first sidelink feedback transmission resource set according to a transmission resource for the first sidelink data, and/or the second sidelink feedback transmission resource is a transmission resource determined in the first sidelink feedback transmission resource set according to a third sidelink feedback transmission resource; and
the third sidelink feedback transmission resource is a transmission resource determined in a second sidelink feedback transmission resource set according to the transmission resource for the first sidelink data, and/or the third sidelink feedback transmission resource is a transmission resource determined in the second sidelink feedback transmission resource set according to a second sidelink feedback transmission resource.

124. The terminal device of claim 123, wherein
the second sidelink feedback transmission resource is a transmission resource determined in the first sidelink feedback transmission resource set according to at least one of: ID information of the first terminal device or ID information of the second terminal device; and/or
the third sidelink feedback transmission resource is a transmission resource determined in the second sidelink feedback transmission resource set according to at least one of: the ID information of the first terminal device, the ID information of the second terminal device or ID information of the third terminal device.

125. The terminal device of claim 123 or 124, wherein
the second sidelink feedback transmission resource is a transmission resource selected from the first sidelink feedback transmission resource set according to a type of the first sidelink feedback information; and/or,
the third sidelink feedback transmission resource is a transmission resource selected from the second sidelink feedback transmission resource set according to the type of the first sidelink feedback information.

126. The terminal device of any one of claims 123 to 125, wherein
the first sidelink feedback transmission resource set is configured by a network device; and/or
the second sidelink feedback transmission resource set is configured by the network device; and/or
the first sidelink feedback transmission resource set is configured by pre-configuration information; and/or
the second sidelink feedback transmission resource set is configured by the pre-configuration information; and/or
the first sidelink feedback transmission resource set is configured by the third terminal device; and/or
the second sidelink feedback transmission resource set is configured by the third terminal device.

127. The terminal device of any one of claims 116 to 118, wherein the second receiving module comprises:
a third receiving sub-module, configured to receive the first sidelink feedback information from the first terminal device through a second sidelink feedback transmission resource, and
a third transmitting sub-module, configured to transmit the first sidelink feedback information to the third terminal device through a third sidelink feedback transmission resource,
wherein at least one of the second sidelink feedback transmission resource or the third sidelink feedback transmission resource is determined by the third terminal device.

128. The terminal device of claim 127, wherein
information of the second sidelink feedback transmission resource and information of the third sidelink feedback transmission resource are transmitted by the third terminal device to the second terminal device, and the information of the second sidelink feedback transmission resource is transmitted by the second terminal device to the first terminal device.

129. The terminal device of claim 127, wherein
information of the second sidelink feedback transmission resource is transmitted by the third terminal device to the first terminal device, and information of the third sidelink feedback transmission resource is transmitted by the third terminal device to the second terminal device.

130. The terminal device of claim 127, wherein
information of the second sidelink feedback transmission resource is transmitted by the third terminal device to the second terminal device and is transmitted by the second terminal device to the first terminal device; and
the third sidelink feedback transmission resource is determined by the second terminal device according to a transmission resource for the first sidelink data.

131. The terminal device of claim 130, further comprising:
a first determining module, configured to determine the third sidelink feedback transmission resource according to at least one of the following information:
time domain resource indication information corresponding to the transmission resource for the first sidelink data;
frequency domain resource indication information corresponding to the transmission resource for the first sidelink data; or
code domain resource indication information corresponding to the transmission resource for the first sidelink data.

132. The terminal device of claim 130, further comprising:
a second determining module, configured to determine the third sidelink feedback transmission resource according to at least one of: identification (ID) information of the first terminal device, ID information of the second terminal device, or ID information of the third terminal device.

133. The terminal device of claim 130, further comprising:
a third determining module, configured to determine one or more sidelink feedback transmission resources corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data.

134. The terminal device of claim 130, further comprising:
a fourth determining module, configured to determine at least one physical resource block (PRB) corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data; and
determine the transmission resource for transmitting the first sidelink feedback information in the at least one PRB according to at least one of: ID information of the first terminal device, ID information of the second terminal device, or ID information of the third terminal device.

135. The terminal device of claim 127, wherein
information of the third sidelink feedback transmission resource is transmitted by the third terminal device to the second terminal device; and
the second sidelink feedback transmission resource is determined by the second terminal device according to a transmission resource for the first sidelink data.

136. The terminal device of claim 135, further comprising:
a fifth determining module, configured to determine the second sidelink feedback transmission resource according to at least one of the following information:
time domain resource indication information corresponding to the transmission resource for the first sidelink data;
frequency domain resource indication information corresponding to the transmission resource for the first sidelink data; or
code domain resource indication information corresponding to the transmission resource for the first sidelink data.

137. The terminal device of claim 135, further comprising:
a sixth determining module, configured to determine the third sidelink feedback transmission resource according to at least one of: identification (ID) information of the first terminal device, ID information of the second terminal device, or ID information of the third terminal device.

138. The terminal device of claim 135, further comprising:
a seventh determining module, configured to determine one or more sidelink feedback transmission resources corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data.

139. The terminal device of claim 135, further comprising:
an eighth determining module, configured to determine at least one PRB corresponding to the transmission resource for the first sidelink data according to at least one of the following information:
a slot index of the transmission resource for the first sidelink data;
a sub-channel index of the transmission resource for the first sidelink data; or
a starting frequency domain position of a frequency domain resource occupied by the transmission resource for the first sidelink data; and
determine the transmission resource for transmitting the first sidelink feedback information in the at least one PRB according to at least one of: ID information of the first terminal device, ID information of the second terminal device, or ID information of the third terminal device.

140. The terminal device of any one of claims 123 to 139, wherein
the transmission resource for the first sidelink data comprises a second PSSCH,
the second sidelink feedback transmission resource comprises a second PSFCH,
the third sidelink feedback transmission resource comprises a third PSFCH, and
the first sidelink feedback information is carried in the second PSFCH and the third PSFCH.

141. The terminal device of claim 124, 132, 134, 137 or 139, wherein the ID information comprises at least one of: radio network temporary identity (RNTI) information of a terminal device or in-group ID information of the terminal device within a communication group.

142. The terminal device of any one of claims 116 to 141, wherein
the first terminal device and the second terminal device belong to different communication groups.

143. A sidelink feedback terminal device, comprising:
a third transmitting module, configured to transmit indication information of a sidelink transmission resource to a second terminal device, wherein the indication information of the sidelink transmission resource is used to determine the sidelink transmission resource, and the sidelink transmission resource is used for the second terminal device to transmit first sidelink data to a first terminal device; and
a third receiving module, configured to receive first sidelink feedback information corresponding to the first sidelink data from the first terminal device or the second terminal device,
wherein the third terminal device comprises a cluster head terminal of a communication group corresponding to the second terminal device.

144. The terminal device of claim 143, further comprising:
a first indication information transmitting module, configured to transmit first indication information to the first terminal device, or
the first indication information to the second terminal device, the first indication information being transmitted by the second terminal device to the first terminal device,
wherein the first indication information is used to indicate a manner in which the first terminal device transmits the first sidelink feedback information; and the manner for transmitting the first sidelink feedback information comprises that: the first terminal device transmits the first sidelink feedback information to the second terminal device, or the first terminal device transmits the first sidelink feedback information to the third terminal device.

145. The terminal device of claim 143, further comprising:
an indication information acquiring module, configured to acquire first indication information,
wherein the first indication information is configured by a network device; or
the first indication information is configured by pre-configuration information; or
the first indication information is configured by resource pool configuration information, and
wherein the first indication information is used to indicate a manner in which the first terminal device transmits the first sidelink feedback information; and the manner for transmitting the first sidelink feedback information comprises that: the first terminal device transmits the first sidelink feedback information to the second terminal device, or the first terminal device transmits the first sidelink feedback information to the third terminal device.

146. The terminal device of any one of claims 143 to 145, wherein the third receiving module comprises:
a receiving sub-module, configured to receive first sidelink feedback information corresponding to the first sidelink data transmitted by the first terminal device through first sidelink feedback transmission resource, wherein the first sidelink feedback transmission resource is determined by the first terminal device according to a transmission resource for the first sidelink data.

147. The terminal device of any one of claims 143 to 145, further comprising:
a fourth transmitting sub-module, configured to transmit indication information of a sidelink feedback channel transmission resource to the first terminal device, wherein the indication information of the sidelink feedback channel transmission resource is used for the first terminal device to determine the first sidelink feedback transmission resource.

148. The terminal device of any one of claims 143 to 145, further comprising:
a fifth transmitting sub-module, configured to transmit indication information of a sidelink feedback channel transmission resource to the second terminal device, and the second terminal device is configured to transmit the indication information of the sidelink feedback channel transmission resource to the first terminal device, wherein the indication information of the sidelink feedback channel transmission resource is used for the first terminal device to determine the first sidelink feedback transmission resource.

149. The terminal device of claim 147 or 148, wherein
the indication information of the sidelink feedback channel transmission resource is carried in at least one of: sidelink control information (SCI), media access control control element (MAC CE) or PC5-radio resource control (RRC) signaling.

150. The terminal device of claim 147 or 148, wherein
the indication information of the sidelink feedback channel transmission resource is carried in SCI at a second stage.

151. The terminal device of claim 147 or 148, wherein
the indication information of the sidelink feedback channel transmission resource comprises at least one of: slot indication information, a slot interval between a slot in which the sidelink feedback channel transmission resource is located and a slot in which the indication information is located, a slot interval between a slot in which the sidelink feedback channel transmission resource is located and a slot in which the first sidelink data is located, a PRB index, an interlaced PRB index, indication information of interlaced PRB pattern, a sub-channel index, channel information, base sequence information, or cyclic shift information.

152. The terminal device of any one of claims 143 to 145, wherein the third receiving module comprises:
a second receiving sub-module, configured to receive second sidelink data transmitted by the first terminal device through the first sidelink feedback transmission resource, the first sidelink feedback information being carried in the second sidelink data, and the first sidelink feedback transmission resource being selected by the first terminal device in a resource set.

153. The terminal device of any one of claims 143 to 145, wherein the third receiving module comprises:
a third receiving sub-module, configured to receive the first sidelink feedback information corresponding to the first sidelink data from the second terminal device through a third sidelink feedback transmission resource, wherein the first sidelink feedback information is transmitted by the first terminal device to the second terminal device through a second sidelink feedback transmission resource;
wherein the second sidelink feedback transmission resource is a transmission resource determined in a first sidelink feedback transmission resource set according to a transmission resource for the first sidelink data, and/or the second sidelink feedback transmission resource is a transmission resource determined in the first sidelink feedback transmission resource set according to a third sidelink feedback transmission resource; and
the third sidelink feedback transmission resource is a transmission resource determined in a second sidelink feedback transmission resource set according to the transmission resource for the first sidelink data, and/or the third sidelink feedback transmission resource is a transmission resource determined in the second sidelink feedback transmission resource set according to a second sidelink feedback transmission resource.

154. The terminal device of claim 153, wherein
the second sidelink feedback transmission resource and the third sidelink feedback transmission resource are located in different slots.

155. The terminal device of claim 153 or 154, wherein
the second sidelink feedback transmission resource is a transmission resource determined in the first sidelink feedback transmission resource set according to at least one of: ID information of the first terminal device or ID information of the second terminal device; and/or
the third sidelink feedback transmission resource is a transmission resource determined in the second sidelink feedback transmission resource set according to at least one of: the ID information of the first terminal device, the ID information of the second terminal device or ID information of the third terminal device.

156. The terminal device of any one of claims 153 to 155, wherein
the second sidelink feedback transmission resource is a transmission resource selected from the first sidelink feedback transmission resource set according to a type of the first sidelink feedback information; and/or,
the third sidelink feedback transmission resource is a transmission resource selected from the second sidelink feedback transmission resource set according to the type of the first sidelink feedback information.

157. The terminal device of any one of claims 153 to 156, wherein
the first sidelink feedback transmission resource set is configured by a network device; and/or
the second sidelink feedback transmission resource set is configured by the network device; and/or
the first sidelink feedback transmission resource set is configured by pre-configuration information; and/or
the second sidelink feedback transmission resource set is configured by the pre-configuration information; and/or
the first sidelink feedback transmission resource set is configured by the third terminal device; and/or
the second sidelink feedback transmission resource set is configured by the third terminal device.

158. The terminal device of any one of claims 143 to 145, wherein the third receiving module comprises:
a fourth receiving sub-module, configured to receive the first sidelink feedback information corresponding to the first sidelink data from the second terminal device through a third sidelink feedback transmission resource, wherein the first sidelink feedback information is transmitted by the first terminal device to the second terminal device through a second sidelink feedback transmission resource;
wherein at least one of the second sidelink feedback transmission resource or the third sidelink feedback transmission resource is determined by the third terminal device.

159. The terminal device of claim 158, further comprising:
a sixth transmitting sub-module, configured to transmit indication information of the second sidelink feedback transmission resource and indication information of the third sidelink feedback transmission resource to the second terminal device, wherein the indication information of the second sidelink feedback transmission resource is transmitted by the second terminal device to the first terminal device, the indication information of the second sidelink feedback transmission resource is used to determine the second sidelink feedback transmission resource, and the indication information of the third sidelink feedback transmission resource is used to determine the third sidelink feedback transmission resource.

160. The terminal device of claim 158, further comprising:
a seventh transmitting sub-module, configured to transmit indication information of the second sidelink feedback transmission resource to the first terminal device, and transmit indication information of the third sidelink feedback transmission resource to the second terminal device, wherein the indication information of the second sidelink feedback transmission resource is used to determine the second sidelink feedback transmission resource, and the indication information of the third sidelink feedback transmission resource is used to determine the third sidelink feedback transmission resource.

161. The terminal device of claim 158, further comprising:
an eighth transmitting sub-module, configured to transmit indication information of the second sidelink feedback transmission resource to the second terminal device, the second terminal device being configured to transmit indication information of the second sidelink feedback transmission resource to the first terminal device, wherein the indication information of the second sidelink feedback transmission resource is used to determine the second sidelink feedback transmission resource; and
wherein the third sidelink feedback transmission resource is determined by the second terminal device according to a transmission resource for the first sidelink data.

162. The terminal device of claim 158, further comprising:
a ninth transmitting sub-module, configured to transmit indication information of the third sidelink feedback transmission resource to the second terminal device, wherein the indication information of the third sidelink feedback transmission resource is used to determine the third sidelink feedback transmission resource; and
wherein the second sidelink feedback transmission resource is determined by the first terminal device according to a transmission resource for the first sidelink data.

163. The terminal device of any one of claims 159-162, wherein
the transmitting module of the terminal device transmits the indication information of the sidelink feedback transmission resource to the first terminal device and/or the second terminal device in at least one of the following manners:
the transmitting module of the terminal device transmits time domain resource indication information corresponding to the sidelink feedback transmission resource, wherein the time domain resource indication information comprises: slot indication information and/or slot interval between time domain position of the sidelink feedback transmission resource and time domain position of sidelink data transmission resource;
the transmitting module of the terminal device transmits frequency domain resource indication information corresponding to the sidelink feedback transmission resource, wherein the frequency domain resource indication information comprises: a PRB index used to determine frequency domain position of the sidelink feedback transmission resource, a sub-channel index and/ or an interlaced PRB index;
the transmitting module of the terminal device transmits code domain resource indication information corresponding to the sidelink feedback transmission resource; and
the transmitting module of the terminal device transmits a resource index value, wherein the resource index value is used to determine the sidelink feedback transmission resource corresponding to the resource index value in a sidelink feedback transmission resource set.

164. The terminal device of any one of claims 153-163, wherein
the transmission resource for the first sidelink data comprises a second PSSCH,
the second sidelink feedback transmission resource comprises a second PSFCH,
the third sidelink feedback transmission resource comprises a third PSFCH, and
the first sidelink feedback information is carried in the second PSFCH and the third PSFCH.

165. The terminal device of claim 155, wherein the ID information comprises at least one of: radio network temporary identity (RNTI) information of the terminal device or in-group ID information of the terminal device within a communication group.

166. The terminal device of any one of claims 143 to 165, wherein
the first terminal device and the second terminal device belong to different communication groups.

167. A terminal device, comprising a processor and a memory, wherein the memory is configured to store a computer program, and the processor is configured to call and run the computer program stored in the memory to execute operations of the sidelink feedback method according to any one of claims 1 to 83.

168. A chip, comprising:
a processor, configured to call and run a computer program, which causes a device equipped with the chip to execute operations of the sidelink feedback method according to any one of claims 1 to 83.

169. A computer readable storage medium, configured to store a computer program, wherein
the computer program causes a computer to execute operations of the sidelink feedback method according to any one of claims 1 to 83.

170. A computer program product, comprising computer program instructions, wherein
the computer program instructions cause a computer to execute operations of the sidelink feedback method according to any one of claims 1 to 83.

171. A computer program, causing a computer to execute operations of the sidelink feedback method according to any one of claims 1 to 83.
